(19) **Europäisches Patentamt**

**European Patent Office**

**Office européen des brevets**

(11) **EP 1 091 515 A1**

(12) **EUROPEAN PATENT APPLICATION**

(43) Date of publication:
**11.04.2001 Bulletin 2001/15**

(51) Int Cl.⁷: **H04J 13/02**

(21) Application number: **00460053.2**

(22) Date of filing: **27.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.10.1999 FR 9912723**
**22.03.2000 FR 0003621**

(71) Applicant: **Mitsubishi Electric Telecom Europe (S.A.)**
**92741 Nanterre Cedex (FR)**

(72) Inventor: **Belaiche, Vincent Antoine Victor**
**35500 Vitre (FR)**

(74) Representative: **Ballot, Paul**
**Cabinet Ballot,**
**4 Rue Général Hoche**
**56100 Lorient (FR)**

(54) **Generation of a compressed mode in a TDMA/CDMA system by reducing the number of data in a time-slot**

(57)    This invention relates to a method for generating a compressed mode affecting a composite channel comprising at least two transport channels. According to the invention, an unequal segmentation step of the transport channels is performed. This segmentation step assigns, for the same transport channel, to each of data segment, a data count determined depending on at least one segmentation coefficient. At least two of said data segments from the same data block having been assigned by said segmentation have distinct data counts This invention is implemented in particular in the field of third generation telecommunication systems for mobiles.

**FIG. 6**

**Description**

This invention relates to a method for generating a compressed mode affecting a composite channel comprising at least two transport channels, each of said transport channels transmitting at least one data block for at least one respective transmission time interval, each of said transmission time intervals having a duration specific to each of said transport channels, at least two of said transport channels having transmission time intervals of distinct duration, said method comprising a step of time segmenting the data of at least one of said transport channels, said time segmentation step segmenting said data blocks into data segments, each of said data segments being associated respectively with a time segment of said transmission time interval, said time segments constituting a period common to the transport channels of said composite channel. This invention is implemented in particular in the field of third generation telecommunication systems for mobiles.

The 3GPP group (3rd Generation Partnership Project) is a standardization organization whose purpose is the standardization of a third generation telecommunication system for mobiles. The technology considered for such systems is the CDMA (Code Division Multiple Access) technology. One of the fundamental aspects distinguishing third generation systems from second generation ones is that, in addition to making more efficient use of the radio spectrum, they provide very good service flexibility.

In such a telecommunication system operating according to the CDMA technology, data transmission and reception are done continuously. Thus, if a radio link is allocated to a mobile station, and if this mobile station is to carry out measurements on another carrier frequency than that carrying this radio link, e.g. to change the active base station, the mobile station must then have two radiofrequency receiving chains. Such an implementation is not desirable because it would significantly increase the cost of the mobile station, together with its size and weight.

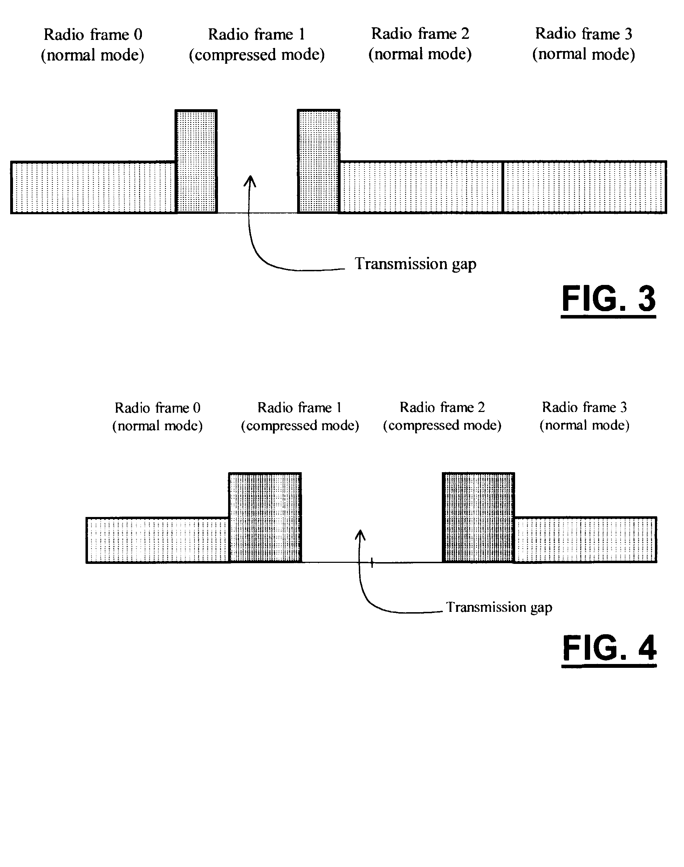

In order to allow the system to be implemented with a single radiofrequency receiving chain, a so-called compressed mode is being defined by the 3GPP group. In contrast to this, a normal mode designates the operating mode other than the compressed mode. In compressed mode, the whole contents of a multiplexing frame, which in normal mode is transmitted homogeneously in one radio frame, is compressed into one part of the radio frame, typically the edges of the frame so as to provide a silent gap within the radio frame. Fig. 3 illustrates this compressed mode. The compressed multiplexing frame is transmitted at the beginning and the end of the radio frame and a transmission gap is created in the middle of the radio frame. Alternatively, two successive frames can be compressed, in order to form a longer transmission gap, as illustrated in Fig. 4. During the transmission gap, the mobile station can carry out measurements on other carrier frequencies.

In general, the compressed mode poses the problem that, in order to obtain the same quality of service during compressed transmission, a higher power transmission is required, and this then causes greater interference to other users. Also, as the compressed mode also involves the uplink, as will be seen later on, a power increase for the mobile station due to the compressed mode further has the drawback of being limited by the capacity of the mobile station.

Creating a compressed mode not only involves the downlink (network to mobile station), but also the uplink (mobile station to network). Indeed, when the frequency on which the measurement is to be carried out is spectrally close to the carrier frequency of the uplink in normal mode, the downlink being simultaneously in the compressed mode, the mobile station produces self-coupling. A part of the incoming signals measured by the mobile station is interfered by its transmission. The larger the spectral distance between the transmission frequency and the measurement frequency, the more the measurement frequency is naturally isolated from the transmission frequency. On the other hand, a short distance requires the construction of an isolating filter with very stringent features, and therefore correspondingly higher costs.

It is an object of this invention to provide a solution for implementing this compressed mode. Before explaining the known methods for generating this compressed mode, the organization of the uplink and downlink of the telecommunication system proposed by the 3GPP group should be described first of all.

In the OSI (Open System Interconnection) model of the ISO (International Standardization Organization), telecommunication equipment is modeled by a layer model constituting a protocol stack wherein each layer is a protocol providing a service to the higher level layer. The service provided by layer 1 is called "transport channels". A transport channel can therefore be understood as a data flow between the level 1 and level 2 layers of the same equipment. A transport channel (abbreviated as TrCH) enables the level 2 layer to transmit data with a certain quality of service. This quality of service depends on the channel coding and interleaving used. A transport channel can also be understood as a data flow between two level 2 layers of two separate equipments connected via a radio link.

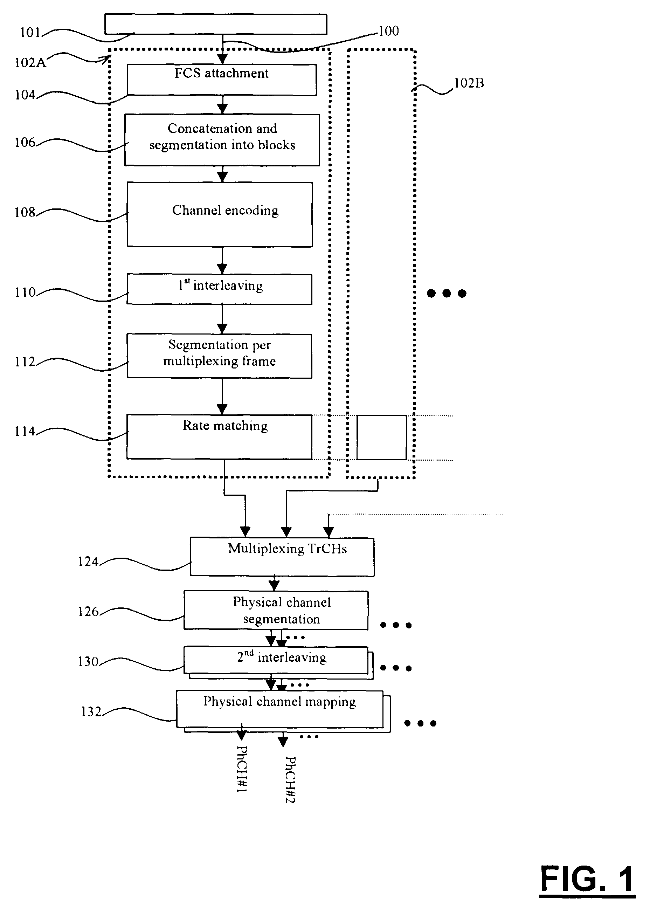

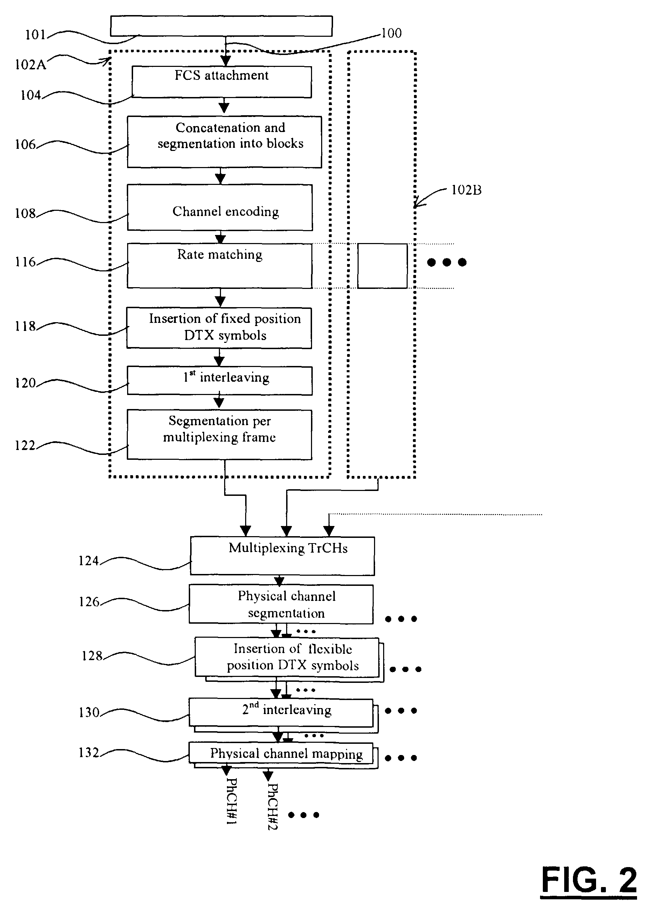

The transmission chains, respectively for the uplink and the downlink of a third generation telecommunication system, such as defined by the 3GPP group, are shown in Figs. 1 and 2. In these figures, similar blocks are referenced by the same number.

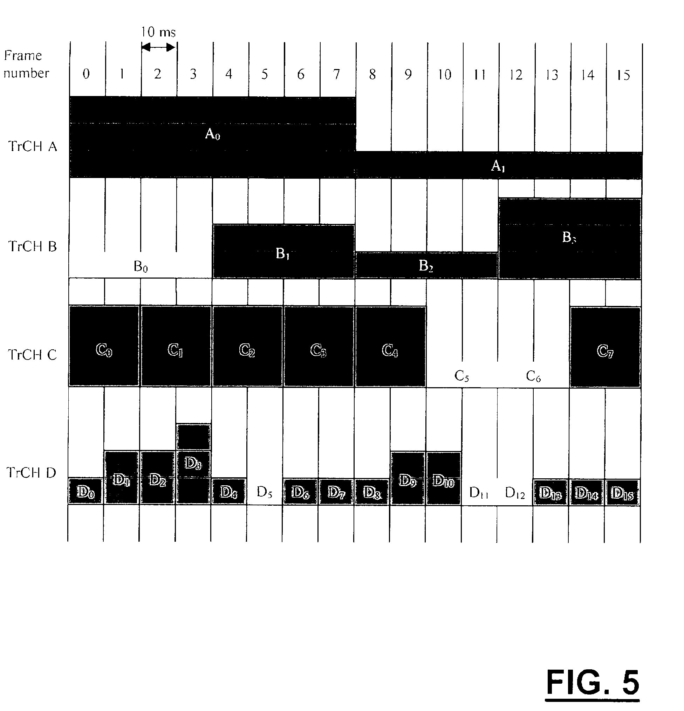

For each transport channel, referenced as 100, a higher level layer 101 periodically supplies the level 1 layer with a transport block set. The periodical interval, at which the transport block set is supplied to the transport channel, is called the transmission time interval or TTI interval of the transport channel. Each transport channel has a TTI interval duration of its own. The duration of the TTI intervals can be 10, 20, 40 or 80 ms. Examples of transport channels A, B, C, and D are shown in Fig. 5. In this Fig. 5, the transport block set received by each transport channel is represented by a bar chart bar. The length of the bar chart bar represents a TTI interval of the associated transport channel and its surface corresponds to the payload of the transport block set. Referring to Fig. 5, the duration of the TTI intervals associated with transport channels A, B, C, and D is 80 ms, 40 ms, 20 ms, and 10 ms, respectively. Moreover, horizontal dotted lines in the bar chart bars indicate the number of transport blocks of each transport block set. In Fig. 5, transport channel A receives, during a first transmission time interval, a first transport block set $A_0$ comprising 3 transport blocks, and during the subsequent TTI interval, a second transport block set $A_1$ comprising a single transport block. Similarly, transport channel B receives the transport block sets $B_0$, $B_1$, $B_2$, and $B_3$ during four consecutive TTI intervals, comprising respectively 0, 2, 1, and 3 transport blocks. Transport channel C receives the transport block sets $C_0$ to $C_7$ during eight successive TTI intervals, and finally, transport channel D receives the transport block sets $D_0$ to $D_{15}$ during sixteen TTI intervals.

In addition, the transport format designates information representing the number of transport blocks contained in the transport block set received by a transport channel and their respective sizes. For a given transport channel, there is a finite set of possible transport formats one of which is selected at each TTI interval depending on the requirements of the higher level layers. For a constant bit rate transport channel, this set only comprises one element. In the example of Fig. 5, transport channel A has a first transport format for the set $A_0$ received during radio frames 0 to 7, and a second transport format for the set $A_1$ during radio frames 8 to 15.

Referring again to Figs. 1 and 2, each transport channel, referenced as 100, receives at each associated TTI interval, a transport block set from a higher level layer 101. Transport channels with different quality of service are processed by separate processing chains 102A, 102B. A frame check sequence FCS is attached to each of these blocks during a step referenced as 104. Such sequences are used upon receipt to detect whether the transport block received is correct or corrupted. It should be noted that the FCS sequence can have a zero size when error detection is not required. The next step, referenced as 106, consists in forming a set of blocks to be coded from the transport block set and their respective FCS. Typically, this step 106 consists in serially concatenating the transport blocks and their respective FCS sequences in order to form a single data block. This single block constitutes a block to be coded, when its size is less than a certain limit depending on the type of channel coding, otherwise it is segmented into a set of identically sized blocks to be coded, so that the size of none of them exceeds the maximum size determined by the channel encoder. The next step 108 consists in performing channel coding for the blocks to be coded. Thus, after this step, a set of coded blocks is obtained at each TTI interval. Typically, each block to be coded of the same set is coded separately, and the resulting blocks are concatenated together, to form a single coded block. A coded block can therefore correspond to several transport blocks. Just as a series of transport block sets constitutes a transport channel, a series of coded transport blocks will be called a coded transport channel. The channels thus coded are then rate matched, interleaved and segmented according to a different order, depending on whether the uplink or the downlink is involved.

In the uplink, illustrated in Fig. 1, the coded transport channel is first interleaved on the associated TTI interval in a step referenced as 110, then segmented in a step referenced as 112, and finally rate matched in a step referenced as 114. During the segmentation operation, the sets of coded transport blocks are segmented into as many data segments as there are radio frames in a TTI interval of the channel involved. Each data segment is associated with a multiplexing frame of its own.

In the downlink, illustrated in Fig. 2, the coded transport channel is first rate matched 116, then interleaved 120 and finally segmented 122. Note that, in this link, rate matching 116 is preceded by a DTX symbol insertion step 118 in the event of fixed position transport channels.

Referring again to Figs. 1 and 2, the different transport channels, after encoding, segmentation, interleaving and rate matching, are multiplexed with each other in a step 124 in order to form a composite channel. This multiplexing step 124 periodically produces a data block called multiplexing frame. The multiplexing frame production period typically corresponds to one radio frame. The series of multiplexing frames constitutes the composite channel. As the bit rate of the multiplexed transport channels may vary, the bit rate of the composite channel obtained after this step 124 also varies. The capacity of a physical channel being limited, it may then happen that the number of physical channels required for conveying this composite channel is greater than one. When the number of physical channels required is greater than one, a step 126 of segmenting this composite channel into physical channels is provided. E.g. for two physical channels, this segmentation step 126 consists in sending, alternatively, one symbol to a first physical channel DPDCH#1 and one symbol to a second physical channel DPDCH#2.

The data segments obtained are then interleaved in a step referenced as 130, then transmitted on the corresponding physical channel in a step referenced as 132. This final step consists in a spread spectrum modulation of the transmitted symbols.

The number of symbols $N_{data}$ available for a multiplexing frame due to the limits of the physical channel(s) is semistatic in the downlink and dynamic in the uplink. A quantity is said to be semistatic if the level 1 layer cannot, of its own accord, change it multiplexing frame by multiplexing frame, or TTI interval by TTI interval, in particular depending on transport channel bit rate variations (i.e. transport format variations). Whatever is not semistatic is said to be dynamic. Hereafter, this number of symbols $N_{data}$ denotes the available bit rate of the composite channel. Thus, the number of physical channels after the physical channel segmentation step 126 is semistatic in the downlink, and dynamic in the uplink.

As mentioned before, one of the issues of third generation mobile radio systems is to efficiently multiplex at the radio interface services not having the same requirements in terms of quality of service (QoS) . The rate matching step (114, 116) allows to optimize this multiplexing as will be explained. The differences in quality of service imply in particular using respective transport channels with different channel coding and interleaving so as to ensure a quality of service specific to each transport channel. The quality of service of a transport channel is defined by at least one criterion among the following:

- maximum transmission delay (hence a TTI interval maximum duration),
- bit error maximum rate (BER), and/or
- transport block error maximum rate (BLER).

The bit error rate is sufficiently low when the set of coded symbols has a sufficient average Eb/I ratio depending on the encoding. The Eb/I ratio is the ratio of the average energy of each coded symbol (Eb) to the average energy of interference (I). The rate matching step (114, 116) is for balancing the Eb/I ratio between transport channels with different qualities of service. The incoming bit error rate BER depends on this Eb/I ratio. Indeed, for a channel decoder performing a decoding operation corresponding to the reverse operation of encoding 108, the higher the Eb/I ratio at the decoder input, the lower the output bit error rate.

For CDMA-type multiple access, the system's capacity is directly limited by the interference level because several entities not separated in space or time can transmit simultaneously on the same carrier frequency. In order to maximize system capacity, each coded transport channel should therefore have a minimum Eb/I ratio but nevertheless sufficient for maintaining its quality of service. The rate matching step (114, 116) allows this Eb/I ratio minimization, because due to it, the different transport channels can receive different Eb/Is according to semistatically determined ratios.

During this rate matching step (114, 116), a $RF_i$ rate matching ratio is applied to each transport channel i, so that for each block k with a symbol count $X_k$ before rate matching and a symbol count $Y_k$ after rate matching, $Y_k$ is such that the $RF_i$ rate matching ratio is, except for rounding, is equal to the ratio $\frac{Y_k}{X_k}$. After rate matching, the average Eb/I ratio has then been multiplied by the matching ratio $RF_i$.

Balancing the Eb/I ratio only establishes the proportion between the respective matching ratios $RF_i$ of the various coded transport channels. It does not enforce the absolute value of rate matching ratio $RF_i$. Thus, the required set of rate matching ratios $RF_i$ has to be determined except for a multiplying factor, hereafter called scale factor LF. The lower limit of the matching ratio $RF_i$ is established by the maximum puncturing rate that the transport channel encoding can tolerate and its upper limit is established by the available bit rate $N_{data}$ supplied to the composite channel by the physical channels allocated to communication, taking into account the definition of the different transport format combinations. Thus, we can write:

$$RF_i = LF \cdot RM_i \qquad\qquad (1)$$

where:

- the set $\{RM_i\}$ is such that the proportions between the different rate matching attributes $RM_i$ correspond to the desired proportions between the Eb/Is of each incoming coded transport channel. The matching attributes $RM_i$ do not take into account the lower and upper limits imposed on the rate matching ratios, respectively by the maximum puncturing rates specific to each transport channel and by the available rate $N_{data}$; and
- LF is the scale factor. The scale factor LF is the same for all coded transport channels.

In the telecommunication system proposed by the 3GPP group, rate matching is not performed in the same way in the uplink and the downlink. In the uplink, it was decided to transmit continuously, because discontinuous transmission would deteriorate the peak to average radiofrequency power ratio at the output of the mobile station. This ratio is therefore sought to be as close as possible to 1. As it is necessary to transmit continuously on the uplink, the ratio $Y_k/X_k \approx RF_i$ can therefore vary every multiplexing frame. Indeed, MSB(j) designating the set of coded block types for a given transport format combination j, then the sum of block sizes after rate matching

$$\sum_{k \in MBS(j)} Y_k$$

must be exactly equal to the available bit rate $N_{data}$. The available bit rate $N_{data}$ can only have certain predefined values $N_1, N_2, ..., N_R$ (with $N_1 < N_2 < ... < N_R$) that depend on the physical channel format in the uplink. In particular, this format is defined by the spreading factor and the number of codes used for a multicode transmission. For each combination j, the following system with unknowns $\{Y_k\}_{k \in MBS(j)}$ is obtained:

$$\begin{cases} \forall k \in MBS(j) \quad Y_k \approx LF \cdot RM_{I(k)} \cdot X_k \\ \sum_{k \in MBS(j)} Y_k = N_{data} \\ LF \geq LFMIN_n \\ N_{data} \in \{N_1,...,N_R\} \end{cases} \qquad (2)$$

where I(k) designates the transport channel producing the block type k.

A rule for selecting the available bit rate $N_{data}$ from the set marked $\{N_1,N_2,...,N_R\}$ is given in the documentation of the 3GPP in order to resolve system (2) unambiguously.

Thus, in the uplink, the rate matching ratio $RF_i$ of a coded transport channel i varies dynamically depending on the variations of transport format combinations.

In the downlink illustrated by Fig. 2, the peak to average radiofrequency power ratio is anyway very poor in any case because the base station is transmitting simultaneously to several users, and the signals for these users are combined constructively or destructively inducing wide variations in the radiofrequency power transmitted by the network. Therefore, it has been decided that, for the downlink, balancing the Eb/I ratios between different transport channels would be done with semistatic ratio rate matching (i.e. in fact with a semistatic LF), and that multiplexing frames would be completed with dummy symbols called DTX symbols. DTX (Discontinuous Transmission) symbols are symbols having a constant value distinct from any possible value of the data symbols. DTX symbols are transmitted with zero energy, and do not carry any information; in fact, they are rather discontinuous transmission indicators than real symbols. Such DTX symbols are inserted dynamically either TTI interval by TTI interval in step 118, or multiplexing frame by multiplexing frame in step 128. In this link, the LF factor used is semistatic and is determined once and for all when the composite channel is formed in order to minimize the number of DTX symbols to be inserted when the bit rate of the composite channel is at a maximum. In fact, this technique is for limiting the deterioration of the peak to average radiofrequency power ratio in the worst case.

Thus, the uplink and the downlink differ in that, in the uplink, rate matching is dynamic in order to complete the multiplexing frames up to the available bit rate Ndata is obtained, whereas, in the downlink, rate matching is semistatic, and DTX symbols are inserted dynamically to complete multiplexing frames.

As indicated before, a segmentation per multiplexing frame step (112, 122) is carried out on each coded and interleaved transport channel. Indeed, before the latter step (112, 122), all operations are done TTI interval by TTI interval. And yet, two distinct transport channels can have distinct TTI interval duration. In order to carry out step 124 of multiplexing different downstream transport channels, it is necessary to come down to a period corresponding to one multiplexing frame. This period is typically a radio frame (10 ms). This is precisely the object of the segmentation per multiplexing frame step (112, 122). Any block of n symbols for a transport channel i having a TTI interval lasting $F_i$ times the common period is segmented into $F_i$ blocks roughly having the size of

$$\left\lfloor \frac{n}{F_i} \right\rfloor \quad or \quad \left\lceil \frac{n}{F_i} \right\rceil .$$

It is recalled that $\lfloor x \rfloor$ et $\lceil x \rceil$ respectively denote the largest integer less than or equal to x and the smallest integer greater than or equal to x.

As indicated above, inserting DTX symbols in the downlink is done either TTI interval by TTI interval (step 118) or multiplexing frame by multiplexing frame (step 128). The insertion of DTX symbols into each TTI interval allows to have fixed positions for each transport channel. Here, fixed means that this position does not depend on the payload of the segments of each transport channel transmitted in the multiplexing frame. The mobile station can thus demultiplex the different transport channels without any explicit indication of payload of each of these transport channels or, more precisely, without any indication of their current transport format. When all the multiplexing frames have been received for a given TTI interval of a transport channel, the mobile station attempts to determine, through successive attempts, the transport format for the TTI interval under consideration. This technique is commonly called blind rate detection (BRD), and more correctly blind transport format detection technique. In this way, system capacity is optimized because it is not necessary for the network to transmit for each transport channel, and for each multiplexing frame, an explicit current bit rate or transport format indication. Unfortunately, this technique is applicable only when the number of possible bit rates for each transport channel is low, and the bit rate of each transport channel is also low (e.g. less than 32 kbit/s).

In the event a bit rate indication exists for the multiplexing frame, then flexible positions for the transport channels can be envisaged with acceptable complexity. It should be noted that such a bit rate indication is not transmitted in the composite channel, but on the physical control channel associated with the physical channel(s) carrying the composite channel. Inserting DTX symbols is then done multiplexing frame by multiplexing frame after the transport channel multiplexing step 124. In Fig. 2, inserting DTX symbols 128 is done more precisely before the second interleaving step 130. The insertion is such that the DTX symbols are grouped in each time slot at transmission. This is also done so that the number of DTX symbols in each time slot is approximately the same. Thus, a fair time diversity can be obtained.

Based on this architecture of the system uplinks and downlinks, a compressed mode can be created in four different ways:

- • by increasing the container size,
- • by reducing the contents size,
- • by modifying the contents distribution, or
- • by postponing transport block transmission.

Increasing the size of the container is the same as increasing the gross bit rate of the set of physical channels for one radio frame. E.g. the gross bit rate is increased by halving the spreading factor used by the CDMA technology. Alternatively, the number of physical channels used can be increased. This may be necessary because the reduced spreading factor cannot be less than 4. In the downlink, this poses the problem of code shortage. Indeed, mutually orthogonal codes are used in the downlink for spreading the spectrum of each user's signals. Indeed, orthogonality is a property required for rejecting interference.

Orthogonal codes, conventionally designated by the term OVSF (Orthogonal Variable Spreading Factor) can be classified according to a tree wherein the spreading factor is multiplied by two at each node on any path from the root to any branch of the tree. The spreading factor is then proportional to the code length. Recursively generating OVSF codes is done as follows: any code C of a length L has two child-codes of double length 2L in the tree that are obtained, for the former, by concatenating C with itself (C C), and for the latter, by concatenating C with its complement (C $\bar{\text{C}}$). This tree classification is useful not only for code generation but also for choosing user codes. Indeed, this tree defines an orthogonality relationship between codes so that if one code is used by a user, then all ancestor codes and all descendant codes of this code are prohibited for other users, otherwise the orthogonality relationship among users is disrupted. Such a solution therefore poses the problem of code shortage for the downlink.

This problem also persists when the code is just reserved and not used for transmission. This is the case during the transmission gap in the compressed mode. This problem is further increased when the reserved code has a low spreading factor: indeed, the lower the spreading factor of a code, the closer this code is to the tree root, and the larger the number of its prohibited descendant codes. It is easily understood that by halving a user's spreading factor, a node is moved up towards the tree root, and the size of the prohibited descendant code sub-tree is doubled, and therefore, the problem of OVSF code shortage is increased.

Another way of implementing this compressed mode consists in reducing the content size by puncturing a sufficient number of symbols. This method has not yet been described completely in the 3GPP documentation, but it is currently assumed that an additional puncturing step will be added after the transport channel multiplexing step 124. However, this method has the drawback that it is difficult to optimize the puncturing pattern depending on the different channel encodings 108 given the position of the additional puncturing step in the transmission chain.

Another way of forming this compressed mode consists in modifying the data symbol position in the composite channel so as to form a transmission gap by grouping the DTX symbols. Hereafter, this method is called DTX symbol grouping method. For the downlink, this solution applies to the composite channel containing DTX symbols for obtaining a transport channel flexible position. Indeed, in this case, rate matching is done statically, and DTX symbols are used to complete the multiplexing frames. For flexible position transport channels, such symbols are added e.g. at the end of multiplexing frames. This solution then consists in grouping such DTX symbols over a period of time within a radio frame so as to form a transmission gap.

Unfortunately, this solution only applies to the downlink with transport channel flexible positions. For fixed position transport channels, all the DTX symbols do not contribute to forming the transmission gap. The DTX symbols for fixing the position of a transport channel are inserted in step 118 and are not grouped together in the radio frame. Indeed, grouping such DTX symbols would be the same as making the transport channel position flexible. The size of the transmission gap that can be formed by grouping DTX symbols is then reduced. Another drawback of this DTX symbol grouping method is that depending on the transport format combination of the multiplexing frame to be transmitted in compressed mode, the number of DTX symbols to be inserted is more or less large. Thus, if it happens, during compressed mode, that nothing is to be transmitted by the higher level layers, the method will be employed advantageously. If, on the other hand, during compressed mode, a lot of data has to be transmitted, then the impact of this method will be reduced, if not cancelled.

Finally, another solution for implementing this compressed mode consists in postponing the transmission of certain transport blocks. Throughout the description, this solution will be called data transmission postponing. This solution only applies to non real-time services capable of tolerating relatively long transmission delays. In fact, this method consists in modifying the set of transport format combinations allowed during the TTI intervals of the transport channel involved comprising a compressed mode frame, so that the transport formats admissible for this transport channel allow less data to be transmitted than in normal mode. This does not mean that data will be removed that was to be transmitted during the TTI intervals comprising a compressed mode multiplexing frame, but only that transmission will be postponed.

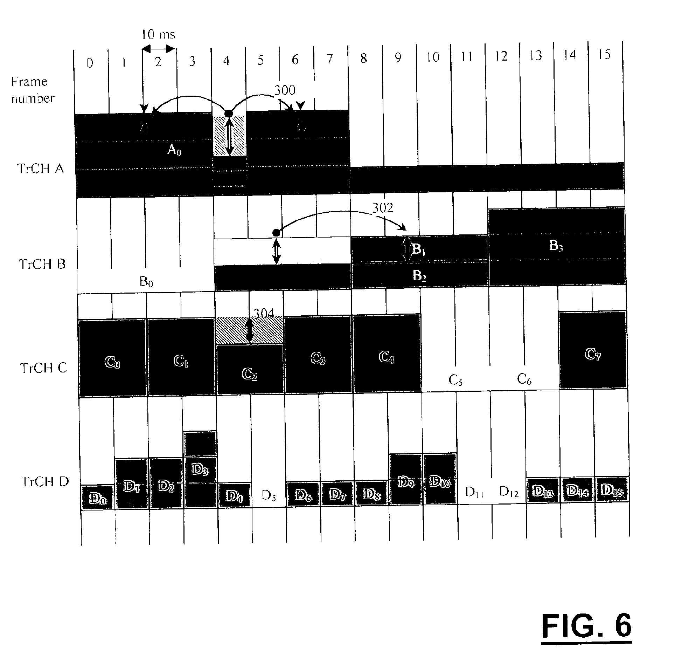

This method is illustrated in Fig. 6, to be compared to Fig. 5, for transport channel B. Figs. 5 and 6 show the same data traffic. In Fig. 6, the fourth radio frame is in compressed mode. The transmission of one of the transport blocks of the set $B_1$ is postponed; it will only be transmitted during radio frames 8, 9, 10, and 11. The main disadvantage of this method is that it does apply only to non real-time services tolerating long delays.

It is an object of the invention to compensate for all or part of the above-mentioned drawbacks by providing a method applicable both to the uplink and the downlink of a telecommunication system, with fixed or flexible service positions, such services being real-time or not, and which, when the puncturing rate is increased, allows to optimize the puncturing pattern.

Also, the subject of the invention is a method for generating a compressed mode affecting a composite channel comprising at least two transport channels, each of said transport channels transmitting at least one data block for at least one respective transmission time interval, each of said transmission time intervals having a duration specific to each of said transport channels, at least two of said transport channels having transmission time intervals of distinct duration, said method comprising a step of time segmenting the data of at least one of said transport channels, said time segmentation step segmenting said data blocks into data segments, each of said data segments being associated respectively with a time segment of said transmission time interval, said time segments constituting a period common to the transport channels of said composite channel, characterized in that said segmentation step assigns, for the same transport channel, to each of said data segments, a data count determined depending on at least one segmentation coefficient, and in that at least two of said data segments from the same data block having been assigned by said segmentation have distinct data counts.

According to the invention, it is chosen to reduce the contents of the transport channel for the compressed mode multiplexing frame by modifying the segmentation step (112, 122). In particular, provision is made for generating a smaller data segment for the compressed mode multiplexing frame and distributing the missing data of this segment over the other segments of the associated TTI interval. A time segment is the period required for transmitting the data segmented in steps 112 and 122 and corresponding to the period at the end of multiplexing step 124.

Preferably, the segmentation coefficients are determined depending on a set of at least one scenario, each of the scenarios being parameterized by at least one possible bit rate of at least one transport channel.

When it is implemented in a telecommunication system using a CDMA-type multiple access technology, the method according to the invention can further comprise a rate matching step allowing to balance the bit rate of transport channels of said composite channel, a rate matching ratio being applied to each of said transport channels, said rate matching ratio being equal to the product of a rate matching attribute specific to said transport channel and a scale factor, said scale factor being common to the set of said transport channels, said scale factor being constant for each of said time segments and capable of having at least two distinct values for at least two time segments, a first one of said at least two distinct values being associated with the compressed mode, and a second one of said at least two distinct values being associated with a so-called normal mode. Said rate matching step is then implemented from at least one mobile station to at least one base station of said telecommunication system.

The method can also further comprise a rate matching step allowing to balance the bit rate of the transport channels of said composite channel, a rate matching ratio being applied to each of said transport channels, said rate matching ratio being equal to the product of a rate matching attribute specific to said transport channel and a scale factor, said scale factor being common to all of said transport channels, at least two intervals, so-called global intervals, being defined for all of said transport channels, the duration of said global intervals being a multiple of the duration of each of said transmission time intervals associated with said transport channels, said scale factor being constant for each global interval and capable of having at least two distinct values for at least two global intervals, a first one of said at least two distinct values being associated with the compressed mode, and a second one of said at least two distinct values being associated with a so-called normal mode. Said rate matching step being then implemented from at least one base station to at least one mobile station of said telecommunication system.

According to other features, the inventive method also comprises the step of:

- calculating said segmentation coefficients according to at least one of the criteria belonging to the group comprising the steps of:

    - minimizing the variance of said segmentation coefficients for the same transport channel;
    - maximizing said compressed mode scale factor ($LF_c$)

- one of the steps belonging to the group comprising the steps of:

    - postponing transmission of at least part of the data comprising said at least one data segment in compressed mode;
    - selecting, for at least one data block comprising said at least one data segment in compressed mode, a source encoding mode among a nominal bit rate mode and at least a reduced bit rate mode for at least one transmission time interval associated with said transport channel to be segmented, said reduced bit rate being lower than said nominal bit rate.

Advantageously, the scale factor is selected either from a first set when said global interval does not comprise any data segment in compressed mode, or from a second set when said global interval comprises at least one data segment in compressed mode. Said first set comprises a single element and said second set comprises an element for each of the compression configurations, each of said compression configurations being defined, on the one hand, by the number of time segments in compressed mode, for the corresponding global interval, and on the other hand, by at least one compression rate associated with each of said time segments in compressed mode, said compression rate representing, for said composite channel, the ratio between the available data count, for a given time segment, in compressed mode, and the available data count, for said given time segment, in normal mode.

Another subject of the invention is a device for generating a compressed mode affecting a composite channel comprising at least two transport channels, each of said transport channels transmitting at least one data block for at least one respective transmission time interval, each of said transmission time intervals having a duration specific to each of said transport channels, at least two of said transport channels having transmission time intervals of distinct duration, said device comprising means for time segmenting the data of at least one of said transport channels, said time segmentation means segmenting said data blocks into data segments, each of said data segments being associated respectively with a time segment of said transmission time interval, said time segments constituting a period common to the transport channels of said composite channel, characterized in that said segmentation means assigns, for the same transport channel, to each of said data segments, a data count determined depending on at least one segmentation coefficient, and in that at least two of said data segments from the same data block having been assigned have distinct data counts.

Another subject of the invention is a base station and a mobile station of a telecommunication system each comprising at least composite channel transmission means and a device such as defined above.

Another subject of the invention is a device for generating a compressed mode affecting a composite channel comprising at least two transport channels, each of said transport channels transmitting at least one data block for at least one respective transmission time interval, each of said transmission time intervals having a duration specific to each of said transport channels, at least two of said transport channels having transmission time intervals of distinct duration, said device comprising, for at least one of said transport channels, data segment concatenation means, said data segments being received in the same transmission time interval, said concatenation means concatenating said data segments into a data block, each of said data segments being respectively associated with a time segment of said transmission time interval, said time segments constituting a period common to the transport channels of said composite channel, characterized in that, for the same transport channel, at least two of said data segments received in the same transmission time interval at the input of said concatenation means have distinct data counts.

Another subject of the invention is a base station and a mobile station of a telecommunication system each comprising at least means for receiving a composite channel comprising at least two transport channels and a device as defined above.

Other features and advantages of the invention will be apparent from the perusal of the following detailed description, with reference to the accompanying drawings, wherein:

Fig. 6 shows the transport channel A of Fig. 5 after unequal segmentation according to the inventive method, the transport channel B of Fig. 5 with transmission postponing of one of its transport blocks, the transport channel C of Fig. 5 coded according to the reduced bit rate coding mode and the transport channel D of Fig. 5;

Fig. 7 shows the transport channels A, B, C, and D of Fig. 5 with a variation of the rate matching ratio for a TTI interval of maximum length; and

Fig. 8 shows the transport channels B and C of Fig. 5 after unequal segmentation and rate matching according to the invention.

Figs. 1 to 5 illustrating prior art have been described in the preamble of the present application.

According to the invention, the size of the multiplexing frame in compressed mode is reduced by modifying the segmentation step (112, 122). Throughout the description, this method will be called unequal segmentation per multiplexing frame method.

Indeed, in the third generation telecommunication systems being specified, the segmentation per multiplexing frame step (112, 122) generates data segments having the same size, except for to one symbol. Thus, e.g., having a 40 ms TTI interval for transmitting 800 coded symbols, these 800 symbols are segmented into four segments of 200 symbols each. Each of these segments is then transmitted for one multiplexing frame. These four segments all having the same size, this is said to be equal segmentation. If the number of symbols to be transmitted is not a multiple of four, or more generally a multiple of the number of multiplexing frames in the coded transport channel TTI interval, then segmentation is said to be quasi equal, i.e. the data segments resulting from segmentation are equal, except for one symbol. E.g., if a block of 799 symbols is to be segmented into four segments, then three segments of 200 symbols and one segment of 199 symbols will be obtained after segmentation.

According to the invention, an unequal segmentation is performed so that the data segment associated with a radio frame in compressed mode has a smaller size to the detriment of the other data segments.

This method is illustrated in Fig. 6 to be compared to Fig. 5 (prior art known solution). The method is applied to the coded transport channel A. In Fig. 6, the radio frame number 4 is in compressed mode. Note that in the present case, to facilitate understanding, each bar chart bar is construed here as representing the load of a data block after the first interleaving step (110, 120), and not as that of a transport block set.

In these figures, the interleaved block from the first interleaving operation and corresponding to $A_0$ is transmitted during radio frames 0 to 7. It comes from a set of three transport blocks. For Fig. 5, this interleaved block is segmented (112, 122) evenly into eight data segments that are equal except for one symbol, each data segment being associated with one of radio frames 0 to 7. For Fig. 6, the interleaved block $A_0$ is segmented unevenly and comprises, at the end of the segmentation step (112, 122), a segment associated with radio frame 4 that is smaller in comparison with the corresponding segment of Fig. 5. The other segments, associated to radio frames 0, 1, 2, 3 and 5, 6, 7 are larger in comparison with the corresponding ones of Fig. 5.

This method allows less data to be transmitted during the radio frame supposed to be in compressed mode (e.g. frame 4 in Fig. 6), but requires more data to be transmitted during the other radio frames of the TTI interval involved (in this case, frames 0 to 3 and 5 to 7 in Fig. 6 for transport channel A). And yet, when the bit rate of the composite channel is already at a maximum, it is not possible to transmit more data in the other TTI interval radio frames, in particular for the downlink. Indeed, the scale factor LF of the downlink is defined so as to minimize the number of DTX symbols inserted when the composite channel is at maximum bit rate. It is then advantageous to combine the unequal segmentation method with another compression method.

An advantage of combining the unequal segmentation method with a complementary method is that compression is distributed for each transport channel over a complete TTI interval instead of concerning only one radio frame. Thus, increasing the composite channel transmission power required for maintaining the quality of service of the transport channels is less because it lasts longer. This is particularly advantageous for the uplink because the mobile station has limited transmission power.

E.g., it is advantageous to combine the unequal segmentation per multiplexing frame method with a compressed mode generation by rate matching method. This complementary method is explained hereafter distinguishing the uplink from the downlink.

In the uplink, the method for creating the compressed mode by rate matching, complementary to the unequal segmentation per multiplexing frame, consists in reducing the LF value for the frame in compressed mode. The compression rate designates the ratio of the number of symbols in a multiplexing frame (time segment) in compressed mode and the number of symbols in the same multiplexing frame (time segment) in normal mode. Then, in order to obtain a compression rate $\beta$ of the multiplexing frame, all that is required is to replace $N_{data}$ by $\beta.N_{data}$ in the equation system (2) . Thus, the equation system (2b) below is obtained:

$$\begin{cases} \forall k \in MBS(j) \; Y_k \; \approx \; LF \cdot RM_{I(k)} \cdot X_k \\ \quad\quad \sum_{k \in MBS(j)} Y_k \; = \; \beta \cdot N_{data} \\ \quad\quad\quad LF \; \geq \; LFMIN_n \\ \quad N_{data} \; \in \; \left\{ N_1, \dots, N_R \right\} \end{cases} \quad\quad (2b)$$

Note that the available rate $N_{data}$ selected from the set $\{N_1,..., N_R\}$ is not necessarily the same in compressed and normal mode. Thus, the scale factor LF is reduced, to create the compressed mode, only when the rule for selecting the available rate $N_{data}$ from the set $\{N_1,..., N_R\}$ imposes not to increase $N_{data}$ for compressed mode (e.g., if this is impossible because $N_{data}$ is already at a maximum, $N_{data}=N_R$ in normal mode, or else if it is preferable to keep the same $N_{data}$ while puncturing more rather than increasing $N_{data}$ for compressed mode, because this would require to increase the number of necessary physical channels).

According to the invention, in the downlink, the method for creating the compressed mode by rate matching, complementary to unequal segmentation per multiplexing frame, consists in varying the scale factor LF with a period corresponding to the longest of the transport channel TTI intervals. This interval is called hereafter a global interval. For further details on this complementary method, reference can be made to the French patent application filed the same day as the present one on behalf of the applicant, and titled "Procédé d'équilibrage de débit entre des canaux de transport de données, dispositif, station de base et station mobile correspondants".

The factor LF is then equal to a value $LF_c$ when the global interval comprises a multiplexing frame in compressed mode and a value $LF_n$ when it doesn't comprise one. Throughout the present application, this method is called rate matching per global interval method.

It is recalled that rate matching 116 in prior art has a semistatic ratio so as to be performed before the first interleaving step 120; the positions of punctured symbols, i.e. the puncturing pattern, are therefore easily optimized with regard to channel coding 108. Indeed, it is preferable to avoid puncturing too many consecutive symbols. It is also preferable to do so before the first interleaving step 120 when rate matching is done by repetition ($RF_i>1$), and not by puncturing ($RF_i<1$) because the repeated symbols are thus moved away from each other by the interleaving operation. The other advantage already mentioned of semistatic ratio rate matching is that it allows of blind rate detection or BRD. Indeed, when the matching ratio $RF_i$ is semistatic, demultiplexing can be done *a priori,* without knowing transport formats. This rate matching per global interval method allows not to change the sequence of rate matching and interleaving steps, and therefore to maintain the advantages mentioned above.

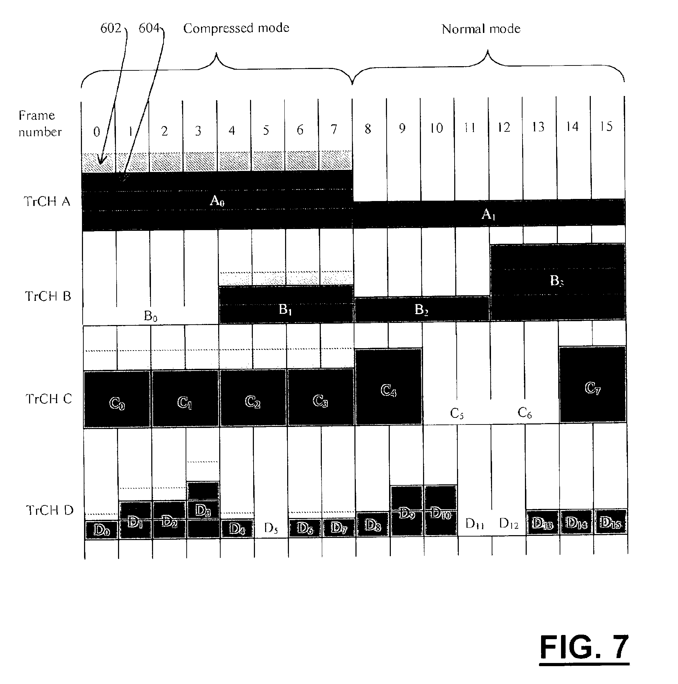

The rate matching per global interval method is illustrated by Fig. 7 to be compared to Fig. 5. It is assumed that radio frame number 4 is in compressed mode in Fig. 7. The bar charts are to be construed here as representing the load in number of symbols after rate matching. To facilitate the understanding of Fig. 7, in this figure, the bar chart bars of Fig. 5 before compression 602 have been transferred in the background of those after compression by rate matching 604.

Frame number 4 is included in the TTI interval corresponding to the set marked $A_0$ for the transport channel A, in the TTI interval corresponding to set $B_1$ for the transport channel B, in the TTI interval corresponding to set $C_2$ for the transport channel C, and in the TTI interval corresponding to set $D_4$ for the transport channel D. As the longest TTI interval is that corresponding to Ao and this interval comprises multiplexing frames 0 to 7, then all the TTI intervals containing at least one of the multiplexing frames 0 to 7 will be modified by the compressed mode factor $LF_c$. All other TTI intervals are modified by the normal mode factor $LF_n$. Thus, referring to Fig. 7, the TTI intervals corresponding to the sets $A_0$, $B_0$, $B_1$, $C_0$, $C_1$, $C_2$, $C_3$, $D_0$, $D_1$, $D_2$, $D_3$, $D_4$, $D_5$, $D_6$, and $D_7$ are modified by the scale factor $LF_c$ whereas the TTI intervals corresponding to the sets $A_1$, $B_2$, $B_3$, $C_4$, $C_5$, $C_6$, $C_7$, $D_8$, $D_9$, $D_{10}$, $D_{11}$, $D_{12}$, $D_{13}$, $D_{14}$, and $D_{15}$ are modified by the scale factor $LF_n$.

In order to allow blind transport format detection (BRD), a first rate matching per global interval embodiment called semistatic rate matching per global interval is described hereafter.

In this first embodiment, the value LF is known in advance and is not detected dynamically. LF has only two possible values: one value $LF_n$ for normal mode, and another smaller value $LF_c$ for compressed mode with $LF_n>LF_c$. Thus a compression rate

$$\alpha = \frac{LF_c}{LF_n}$$

can be obtained for all the global interval. The value $LF_n$ is obtained as in prior art, whereas the value $LF_c$ is chosen so as to obtain the desired compression rate $\alpha$. Note that the possible compression rate $\alpha$ can be no more than

$$\frac{LFMIN_c}{LF_n},$$

because it is required that $LF_c \geq LFMIN_c$. In general, $LFMIN_c$ has the same value as $LFMIN_n$ which is the minimum value possible for the scale factor in normal mode. However, the value of $LFMIN_c$ can be smaller than that of $LFMIN_n$ when the set of admissible transport format combinations differs for normal mode and compressed mode (e.g. if the transmission postponing method is used moreover), and that this situation is such that one of the transport channels never transmits data in compressed mode.

It should be noted that the radio frame numbers in compressed mode are known in advance because they can be defined by a protocol. Therefore, knowing the radio frame number, it is possible to find out whether $LF_n$ or $LF_c$ is being used, and consequently, there is no dynamic detection.

A second rate matching per global interval embodiment is possible when blind transport format detection, or BRD, is not used, and when transport channels have flexible positions. This second embodiment is hereafter called dynamic rate matching per global interval.

For dynamic rate matching per global interval, a set M of transport channels with a maximum TTI interval duration is considered. This set M comprises at least one transport channel, but does not necessarily comprise all the transport channels with maximum TTI interval duration. Dynamic rate matching per global interval differs from downlink prior art, in that the scale factor LF is determined dynamically with a period corresponding to the global interval duration, as a function of the transport channel transport formats included in the set M. It is assumed that the transport formats of the other transport channels are such that the bit rate of the composite channel after rate matching is at a maximum during the global interval. With these known or assumed transport format values, the factor LF is determined in order to minimize the number of DTX symbols to be inserted.

In the example of Fig. 7, the scale factor LF is determined twice, firstly for the multiplexing frames 0 to 7 and secondly for the multiplexing frames 8 to 15. For the frames 0 to 7 (8 to 15, respectively), LF is determined in order to minimize the number of DTX symbols to be inserted assuming that the transport formats of transport channels B, C, and D are such that, the transport format of transport channel A being $A_0$ ($A_1$, respectively), the bit rate of the composite channel is at a maximum during the frames 0 to 7 (8 to 15, respectively).

Thus, in the event of dynamic rate matching per global interval, the scale factor LF is determined depending on a partial transport format combination p. This partial combination defines the transport format of the transport channels of the set M.

Thus, the scale factor LF has a value $LF_{n,p}$ suitable for normal mode as a function of the partial combination p. In order to create the compressed mode, the scale factor LF with a value $LF_{c,p}$ given by the equation:

$$LF_{c,p} = \alpha \cdot LF_{n,p}$$

is used.

The upper limit of the compression rate is the same as for semistatic rate matching per global interval.

It should be noted that, in the preceding, for rate matching, $\alpha$ only denotes the compression rate obtained through rate matching. The final rate results from the product of compression rates obtained by the different methods combined together.

The unequal segmentation and rate matching methods can be combined advantageously so as to limit the increase in the data count for the other TTI interval radio frames that are not in compressed mode.

Take the example of Fig. 5 and assume that a compression rate $\beta$ is to be obtained for the multiplexing frame number 4, e.g. $\beta = 50\%$. It is also assumed that the downlink is involved.

$X_{i,m}$ respectively denotes the load for the TTI interval m of the coded transport channel $i \in \{A,B,C,D\}$. $X_{i,m}$ is the sum of the sizes of all coded blocks produced by transport channel i during the TTI interval m for a certain transmission scenario. When DTX symbols are inserted in insertion step 118 for transport channel fixed positions, then they are counted in $X_{i,m}$ (i.e. their number is added to the sum of the coded block sizes). In Fig. 5, the transmission time interval 0 of the coded transport channel A includes the multiplexing frames 0 to 7, the transmission time interval 1 of the coded transport channel B includes the multiplexing frames 4 to 7, etc.. More generally, the transmission time interval m of the coded transport channel i includes the radio frames $m \cdot F_i$ to $((m+1) \cdot F_i - 1)$ with $F_A = 8$, $F_B = 4$, $F_C = 2$, and $F_D = 1$.

Also note $Z_{i,m}$ defined by: $Z_{i,m} = RM_i \cdot X_{i,m}$. $Z_{i,m}$ is the normalized bit rate after rate matching of the transport channel i. "normalized" means that it does not depend on the scale factor LF. $N_{data}$ is the available bit rate supplied to the composite channel by the resources of the physical channels allocated per multiplexing frame in the downlink. $N_{data}$ is a semistatic constant in normal mode. Moreover, it is assumed that $N_{data}$ has the same value in compressed mode as in normal mode. This is the case except when the method for increasing the gross bit rate of all physical channels is used during the frame in compressed mode (e.g. by halving the spreading factor).

Consider the case of a downlink with semistatic rate matching per global interval (first embodiment).

Assume that a rate matching compression rate $\alpha$, to be determined, is applied by the rate matching per global interval method to the frames 0 to 7. Determining $\alpha$ results in determining $LF_c$ knowing that $LF_c \geq LFMIN_c$, because $LF_c = \alpha \cdot LF_n$ and where $LF_n$ is the scale factor LF for normal mode, known as a semistatic constant. Moreover, assume that the TTI interval 0 of the transport channel A is segmented unevenly according to the respective coefficients $a_0$, $a_1$, ..., $a_7$, to be determined, i.e. that the proportion of the number of symbols $LF_c \cdot Z_{A,0}$ in the radio frame t is $a_t$. Then, $\forall t \in \{1,...,7\}$ $a_t \geq 0$ is obtained because $a_t$ is a percentage, and $a_0 + a_1 + ... + a_7 = 1$ because at the end of the TTI interval 0, all $LF_c \cdot Z_{A,0}$ symbols must have been transmitted.

Also, the segmentation coefficients $b_0$, $b_1$, $b_2$, and $b_3$ are defined for the transport channel B during its TTI interval 0, segmentation coefficients $C_0$ and $C_1$ for transport channel C during its TTI interval 0.

Then the system composed of the conjunction of the following equations (3) to (17) must be resolved where the unknown is the 15-fold ($LF_c$, $a_0$,..., $a_7$, $b_0$,.., $b_3$, $c_0$, $c_1$) :

$$LF_c \geq LFMIN_c \tag{3}$$

$$a_0 + a_1 + ... + a_7 = 1 \tag{4}$$

$$\forall j \in \{0,1, ..., 7\}\ a_j \geq 0 \tag{5}$$

$$b_0 + b_1 + b_2 + b_3 = 1 \tag{6}$$

$$\forall j \in \{0, 1, 2, 3\}\ b_j \geq 0 \tag{7}$$

$$c_0 + c_1 = 1 \tag{8}$$

$$c_0 \geq 0,\ \text{and}\ c_1 \geq 0 \tag{9}$$

$$LF_c \cdot \left( a_0 \cdot Z_{A,0} + \frac{1}{4} \cdot Z_{B,0} + \frac{1}{2} \cdot Z_{C,0} + Z_{D,0} \right) \leq N_{data} \tag{10}$$

$$LF_c \cdot \left( a_1 \cdot Z_{A,0} + \frac{1}{4} \cdot Z_{B,0} + \frac{1}{2} \cdot Z_{C,0} + Z_{D,1} \right) \leq N_{data} \tag{11}$$

$$LF_c \cdot \left( a_2 \cdot Z_{A,0} + \frac{1}{4} \cdot Z_{B,0} + \frac{1}{2} \cdot Z_{C,0} + Z_{D,2} \right) \leq N_{data} \tag{12}$$

$$LF_c \cdot \left( a_3 \cdot Z_{A,0} + \frac{1}{4} \cdot Z_{B,0} + \frac{1}{2} \cdot Z_{C,1} + Z_{D,3} \right) \leq N_{data} \tag{13}$$

$$LF_c \cdot (a_4 \cdot Z_{A,0} + b_0 \cdot Z_{B,1} + C_0 \cdot Z_{C,2} + Z_{D,4}) \leq \beta \cdot N_{data} \tag{14}$$

$$LF_c (a_5 \cdot Z_{A,0} + b_1 \cdot Z_{B,1} + C_1 \cdot Z_{C,2} + Z_{D,5}) \leq N_{data} \tag{15}$$

$$LF_c \cdot \left( a_6 \cdot Z_{A,0} + b_2 \cdot Z_{B,1} + \frac{1}{2} \cdot Z_{C,3} + Z_{D,6} \right) \leq N_{data} \tag{16}$$

$$LF_c \cdot \left( a_7 \cdot Z_{A,0} + b_3 \cdot Z_{B,1} + \frac{1}{2} \cdot Z_{C,3} + Z_{D,7} \right) \leq N_{data} \tag{17}$$

In this system, the equations (3) to (9) constitute the constraints related to the unknowns, whereas the equations (10) to (17) are assessments of the number of symbols transmitted respectively through multiplexing frames 0 to 7.

Let SCN be SCN = $(Z_{A,0}, Z_{B,0}, Z_{B,1}, Z_{C,0}, Z_{C,1}, Z_{C,2}, Z_{C,3}, Z_{D,0}, Z_{D,1},..., Z_{D,7})$ , a possible scenario for transport channels A to D during radio frames 0 to 7. Resolving this equation system for such a scenario produces a set of solutions. This scenario is not known in advance. Indeed, as transport channels have a variable bit rate, it is impossible to know e.g. the value of $X_{A,1}$ before the beginning of frame 2. However, the 15-fold $(LF_c, a_0,..., a_7, b_0,..., b_3, c_0, c_1)$ should be determined in advance, and this whatever scenario will occur. This is possible as the number of scenarios is limited because of the limited number of transport formats possible for each transport channel. It is therefore possible to resolve the system of the equations (3) to (17) for all scenarios SCN, and to find the set of solutions for all scenarios, which is nothing else but the intersection of the sets of solutions for each scenario.

If the set of solutions for all scenarios is not empty, then it is possible to create a compressed mode on frame number 4 with a compression rate $\beta$ using the inventive method. Otherwise, another method has to be called upon: e. g., halving the spreading factor for frame 4 so as to replace $N_{data}$ by a greater value in equation (14) corresponding to the assessment of the number of symbols of frame 4.

When the set of solutions $(LF_c, a_0,..., a_7, b_0,..., b_3, c_0, c_1 )$ of the system of the equations (3) to (17) for all possible scenarios SCN includes several solutions, one of them is chosen so as to optimize one of the following criteria:

- maximizing the scale factor $LF_c$;
- obtaining the most even segmentation possible, e.g. by minimizing

$$\sum_{t=0}^{t=7} \left( a_t - 1/8 \right)^2 , \quad \sum_{t=0}^{t=3} \left( b_t - 1/4 \right)^2 ,$$

and/or

$$\sum_{t=0}^{t=1} \left( c_t - 1/2 \right)^2 .$$

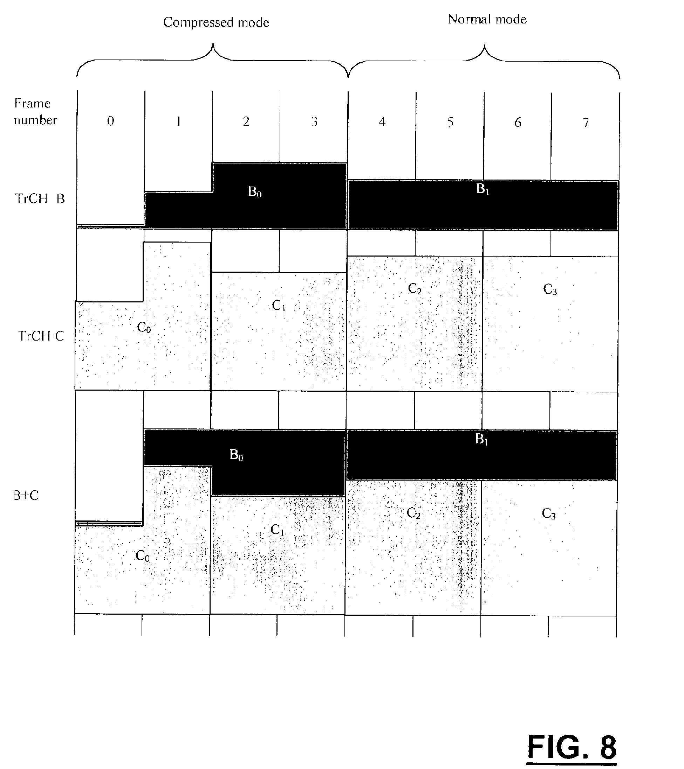

In order to facilitate the understanding of this combined method, consider a simple numerical example depicted in Fig. 8. In this example, only the coded transport channels B and C, the respective TTI intervals of which have a duration of 40 ms and 20 ms, are taken into account. Fig. 8 shows the load of the coded transport channels B and C after rate matching. Assume that these channels can be punctured to a maximum of 20%, and that C must have 1.8 dB more than B in terms of the Eb/I ratio. As B is the least demanding in terms of the Eb/I ratio, it can be punctured to a maximum, i.e. LFMIN.$RM_B$ = 0.8. As for $RM_c$, it is determined by $RM_B$ as $RM_c$ must have 1.8 dB more than $RM_B$, i. e. LFMIN·RMc = $(10^{0,18})$·LFMIN·$RM_B$ = 1.21.

Subsequently, in order to simplify without losing generality, it is also assumed that the scale factors marked LFMIN and $LFMIN_c$ are equal to 1 (in general, the scale factors LFMIN and $LFMIN_c$ are real numbers, and the matching

attributes $RM_i$ are integers; here, in order to simplify the equations, it is assumed similarly that the scale factors marked $LFMIN_n$ and $LFMIN_c$ are integers and the matching attributes $RM_i$ are real).

Now, assume that the coded transport channels B and C have a constant bit rate, respectively 9.38 kbit/s and 16.53 kbit/s. Note that these bit rates do not match the bit rates of the corresponding transport channels. The latter are lower due to the redundancy introduced by the channel coding step 108. Also note that the assumption of constant bit rates is not all too restrictive because, for the problem under consideration, this assumption is the same as assuming that the transport channels marked B and C have independent bit rates and that they are both at maximum bit rate.

Therefore, this assumption allows to consider only one scenario SCN = $(Z_{B,0}, Z_{C,0}, Z_{C,1})$ . This scenario is calculated as follows:

$Z_{C,0}$ = $RM_c$·(bit rate of C)·(duration of TTI associated with C),
That is $Z_{C,0}$ = 1.21 · 16.53 kbit/s · 20 ms = 400 symbols.
$Z_{C,1}$ = 400 symbols because the bit rate of C is constant, and therefore $Z_{C,1} = Z_{C,0}$.
$Z_{B,0}$ = 0.8 · 9.38 kbit/s · 40 ms = 300 symbols.

Consequently, the following scenario is obtained SCN = (300,400,400).

If moreover, it is assumed that the available bit rate $N_{data}$ supplied to the composite channel per multiplexing frame is 480 symbols and that a compression factor $\beta$=50% is to be obtained on multiplexing frame 0, the following equation system is obtained:

$$LF_c \geq 1 \tag{3b}$$

$$b_0 + b_1 + b_2 + b_3 = 1 \tag{6b}$$

$$\forall j \in \{0,1,2,3\} b_j \geq 0 \tag{7b}$$

$$C_0 + C_1 = 1 \tag{8b}$$

$$C_0 \geq 0, \text{ and } C_1 \geq 0 \tag{9b}$$

$$LF_c \cdot (b_0 \cdot 300 + C_0 \cdot 400) \leq 240 \tag{14b}$$

$$DRF_c \cdot (b_1 \cdot 300 + C_1 \cdot 400) \leq 480 \tag{15b}$$

$$LF_c \cdot (b_2 \cdot 300 + 200) \leq 480 \tag{16b}$$

$$LF_c \cdot (b_3 \cdot 300 + 200) \leq 480 \tag{17b}$$

When this system is resolved by maximizing for instance $LF_c$, the following results are obtained:

$b_0$=2.4762% $b_1$=21.3333% $b_2$=38.0952% $b_3$=38.0952%
$c_0$=37.4286% $c_1$=62.5714%
$LF_c$ = 1.52727
The value of $LF_c$ is to be compared to that of $LF_n$.
$LF_n$ = 480/(0.25 · 300 + 0.5 · 400) = 1.74545

This means that for the four multiplexing frames 0 to 3, the power only has to be increased by

$$- 10 \cdot \log_{10}\left(\frac{\mathrm{LF_c}}{\mathrm{LF_n}}\right) = 10 \cdot \log_{10}\left(\frac{1.74545}{1.52727}\right) \approx 0.58 \mathrm{dB}.$$

With the prior art known solution, increasing the power only occurs for the multiplexing frame referenced as 0 and corresponds to $-10 \cdot \log_{10}(\beta) \approx 3\mathrm{dB}$. Thus, about 2.4dB are saved when transmitting the frame in compressed mode due to a longer power increase.

In general, the transmission power varies as the inverse 1/LF of the scale factor, and therefore, the amplitude of the data symbols on the physical channel varies as the inverse $1/\sqrt{\mathrm{LF}}$ of the scale factor square root.

Thus, when comparing, in Fig. 8, the two global intervals respectively corresponding to frames 0 to 3 and frames 4 to 7, the frames 0 to 3, comprising a compressed mode frame, have a scale factor LF equal to $\mathrm{LF_c} = 1.52727$, and the frames 4 to 7, all in normal mode, have a scale factor LF equal to $\mathrm{LF_n} = 1.74545$. Therefore, the compression rate is only

$$\left(\frac{\mathrm{LF_c}}{\mathrm{LF_n}}\right) = \left(\frac{1.52727}{1.74545}\right) = 87.5\%$$

for the global interval set corresponding to frames 0 to 3, whereas a 50% total load compression is obtained for frame 0.

The case of a downlink combining the unequal segmentation per multiplexing frame method and the semistatic rate matching per global interval method has just been examined.

It is also possible to combine, for this link, the unequal segmentation per multiplexing frame method with the dynamic rate matching per global interval method. In this case, instead of resolving the system of the equations (3) to (17) in conjunction with all the possible scenarios SCN = $(Z_{A,0}, Z_{B,0}, Z_{B,1}, Z_{C,0}, Z_{C,1}, Z_{C,2}, Z_{C,3}, Z_{D,0}, Z_{D,1}, ..., Z_{D,7})$, it just has to be resolved in conjunction with only the scenarios where $Z_{A,0}$ is known and corresponds to a case given by the transport format partial combination p. Then a solution $(\mathrm{LF_c}, a_0,..., a_7, b_0,..., b_3, C_0, C_1)$ is found for each partial format combination p, and only one of these solutions is selected dynamically at the beginning of the corresponding global interval.

For the uplink, the unequal segmentation per multiplexing frame method can be used. For this purpose, all that is required is resolving the system of the equations (3) to (17) as for the downlink, in order to find the segmentation coefficients of the set $(a_0,..., a_7, b_0,..., b_3, c_0, c_1)$. These coefficients are then used for segmentation per multiplexing frame, and the value of the scale factor LF is determined dynamically multiplexing frame by multiplexing frame so that no DTX symbol has to be inserted. It should be noted that for this link, the value of the available bit rate $N_{data}$ in the system of the equations (3) to (17) can be any value that is sufficiently large (e.g. $N_{data} = N_R$). Indeed, resolving this system only allows to obtain the segmentation coefficients, not the scale factor. The scale factor LF is determined by then resolving the following system (2c) to be compared to systems (2) and (2b):

$$\begin{cases} \forall k \in \mathrm{MBS(j)} \ Y_k \approx \mathrm{LF} \cdot F_{I(k)} \cdot \alpha_{I(k),t} \cdot \mathrm{RM}_{I(k)} \cdot X_k \\ \sum_{k \in \mathrm{MBS(j)}} Y_k = \beta_t \cdot N_{data} \\ \mathrm{LF} \geq \mathrm{LFMIN}_n \\ N_{data} \in \{N_1, ..., N_R\} \end{cases} \quad (2c)$$

where:

$t$       is the frame number,

$\beta_t$       is the compression rate of frame t, i.e. 1 when the frame is in normal mode, and e.g. 0.5 when it is in compressed mode with 50% compression,

$\alpha_{i,t}$       is the segmentation coefficient of transport channel i defining the size of the segment transmitted in the frame t. $\alpha_{i,t}$ is given by resolving the system of the equations (3) to (17) when the TTI interval of transport channel i containing frame t also comprises a frame in compressed mode. Otherwise $\alpha_{i,t} = \frac{1}{F_i}$.

This method combining unequal segmentation and rate matching is also applicable in the event the number of frames in compressed mode in the corresponding global interval is greater than 1. All that is required is resolving the system of the equations referenced as (3) to (17) by replacing, on the one hand, the second member of the equations (10) to (17) by $\beta_t \cdot N_{data}$ where t is the frame number (namely 0 for equation (10), 1 for equation (11), and so on), and $\beta_t$ is the compression rate of frame number t, with $\beta_t$ equal to 1 if the frame is not in compressed mode, and e.g. equal to 0.6 if the frame is in compressed mode with 60% compression, and considering a solution with more unknowns. It can then be considered that the solution to be sought is the 25-fold (LF$_c$, $\vec{a}$, $\vec{b}_0$, $\vec{b}_1$, $\vec{c}_0$, $\vec{c}_1$, $\vec{c}_2$, $\vec{c}_3$ ), where $\vec{a}$ = ($a_0$, $a_1$, $a_2$, $a_3$, $a_4$, $a_5$, $a_6$, $a_7$) is the set of the segmentation coefficients of the TTI interval referenced as 0 of coded transport channel A, where $\vec{b}_{m\in\{0,1\}}$ = ($b_0^m$, $b_1^m$, $b_2^m$, $b_3^m$) is the set of the segmentation coefficients of TTI m of the coded transport channel B and where $\vec{c}_{m\in\{0,1,2,3\}}$ = ($c_0^m$, $c_1^m$) is the set of the segmentation coefficients of TTI m of the coded transport channel C.

$$LF_c \geq LFMIN_c \tag{3c}$$

$$a_0 + a_1 + ... + a_7 = 1 \tag{4c}$$

$$\forall j \in \{0,1,...,7\} a_1 \geq 0 \tag{5c}$$

$$\forall m \in \{0,1\}\ b_0^m + b_1^m + b_2^m + b_3^m = 1 \tag{6c}$$

$$\forall m \in \{0,1\}\ \forall t \in \{0,1,2,3\}\ b_t^m \geq 0 \tag{7c}$$

$$\forall m \in \{0,1,2,3\}\ c_0^m + c_1^m = 1 \tag{8c}$$

$$\forall m \in \{0,1,2,3\}\ c_0^m \geq 0,\ and\ c_1^m \geq 0 \tag{9c}$$

$$LF_c \cdot (a_0 \cdot Z_{A,0} + b_0^0 \cdot Z_{B,0} + c_0^0 \cdot Z_{C,0} + Z_{D,0}) \leq \beta_0 N_{data} \tag{10c}$$

$$LF_c \cdot (a_1 \cdot Z_{A,0} + b_1^0 \cdot Z_{B,0} + c_1^0 \cdot Z_{C,0} + Z_{D,1}) \leq \beta_1 N_{data} \tag{11c}$$

$$LF_c \cdot (a_2 \cdot Z_{A,0} + b_2^0 \cdot Z_{B,0} + c_0^1 \cdot Z_{C,1} + Z_{D,2}) \leq \beta_2 N_{data} \tag{12c}$$

$$LF_c \cdot (a_3 \cdot Z_{A,0} + b_3^0 \cdot Z_{B,0} + c_1^1 \cdot Z_{C,1} + Z_{D,3}) \leq \beta_3 N_{data} \tag{13c}$$

$$LF_c \cdot (a_4 \cdot Z_{A,0} + b_0^1 \cdot Z_{B,1} + C_0^2 \cdot Z_{C,2} + Z_{D,4}) \leq \beta_4 N_{data} \tag{14c}$$

$$LF_c \cdot (a_5 \cdot Z_{A,0} + b_1^1 \cdot Z_{B,1} + c_1^2 \cdot Z_{C,2} + Z_{D,5}) \leq \beta_5 N_{data} \tag{15c}$$

$$LF_c \cdot (a_6 \cdot Z_{A,0} + b_2^1 \cdot Z_{B,1} + c_0^3 \cdot Z_{C,3} + Z_{D,6}) \leq \beta_6 N_{data} \tag{16c}$$

$$LF_c \cdot (a_7 \cdot Z_{A,0} + b_3^1 \cdot Z_{B,1} + C_1^3 \cdot Z_{C,3} + Z_{D,7}) \leq \beta_7 N_{data} \tag{17c}$$

It is also clear that this method is applicable to a system like that proposed by the 3GPP group wherein the possible TTI interval duration are different from 10 ms, 20 ms, 40 ms or 80 ms. It should just be possible to define a global interval having boundaries coinciding with at least one boundary of a TTI interval of each coded transport channel. This is the case in particular when the values of the TTI interval duration classified in ascending order are such that any value (except of course the first one) is a multiple of the preceding one, and in particular when, as in the 3GPP system, the possible values of the TTI duration grow geometrically.

Moreover, the unequal segmentation per multiplexing frame method can also be combined with other methods than the rate matching one. For this purpose, the set of scenarios SCN = ($Z_{A,0}$, $Z_{B,0}$, $Z_{B,1}$, $Z_{C,0}$, $Z_{C,1}$, $Z_{C,2}$, $Z_{C,3}$, $Z_{D,0}$, $Z_{D,1}$, ..., $Z_{D,7}$ ) during the global interval just has to take into account the impact of such complementary methods.

E.g., it is possible to combine the unequal segmentation per multiplexing frame method with the data transmission postponing method already disclosed in the preamble of the present description. All that is required then is to consider only scenarios wherein the bit rates of the transport channel involved in the data transmission postponing are below a limit in accordance with this method. This method is applicable only to non real-time services.

For real-time services, e.g. for voice transmission, it is possible to combine the unequal segmentation per multiplexing frame method with a method consisting in reducing the bit rate of the source coding of one of the real-time transport channels. If it is considered that transport channel C is involved, then the numbers of symbols $Z_{C,m}$ of the scenarios should reflect this bit rate reduction for the TTI intervals involved.

For these services, it is possible to have several source coding modes only one of which is selected. It is recalled that source coding consists in coding a time interval of an analog signal into a bit data block; e.g. 20 ms of voice are coded in 160 symbols. The time interval on which the source encoder acts corresponds to the TTI interval of the transport channel(s) whereon the data produced are transmitted. Assume that a single transport channel is used for transmitting all the coded source symbols. The source encoder then produces, for each TTI interval, a transport block the size of which depends on the selected source coding mode. For the system proposed by the 3GPP group, the source encoder used for telephony is the AMR encoder that has eight different coding modes.

In the invention, provision can be made for selecting a different coding mode depending on whether the TTI interval comprises a frame in compressed mode or not. This results in providing different transport format sets depending on whether the TTI interval comprises a frame in compressed mode or not.

E.g., if there is no frame in compressed mode in the TTI interval under consideration, then the set of transport formats is the set S1 and, should the opposite occur, S2 is chosen with:

S1 = { (0 transport blocks),
     (1 transport block with 244 symbols),}
S2 = { (0 transport blocks),
     (1 transport block with 160 symbols)} }

Consequently, S2 allows a 66% compression vs. S1.

An example 304 of this method is given in Fig. 6 to be compared to Fig. 5 for transport channel C. In these figures, the same traffic is represented, Fig. 5 showing what would happen in normal mode, and Fig. 6 what would happen in compressed mode, for radio frame number 4. The transport block set $C_2$ is transmitted during the radio frames 4 and 5 and it comprises a single transport block. In Fig. 5, this transport block is produced by a nominal bit rate source encoder, whereas in Fig. 6, it is produced by a source encoder operating according to a reduced bit rate mode with reduced bit rate equal to 66% of the nominal bit rate.

It should be noted that the invention can be implemented, even if the rate matching attribute also depends on the type (and in particular the size) of the block to which rate matching is applied. Indeed, this may be interesting, e.g. because some channel encoders, such as turbo encoders, are more efficient when the block to be coded is large. In this case, $RM_i$ just has to be replaced by $RM_{i,k}$ in the equations, where i is the transport channel and k the type of block to which rate matching is applied. Thus, in the equations (2), (2b), and (2c), the product $RM_{I(k)} \cdot X_k$ becomes $RM_{I(k),k} \cdot X_k$. Also, the definition of $Z_{i,m}$ is modified. If $BBS_{(i,m)}$ is the set of coded block types transmitted

- through the transport channel i ($\forall k \in BBS$ (i,m) I (k)=i) ,
- during the TTI interval m of transport channel i, and
- for the scenario under consideration,

then

$$X_{i,m} = \sum_{k \in BBS(i,m)} X_k$$

is obtained. Then, $Z_{i,m}$ is defined by

$$Z_{i,m} = \sum_{k \in BBS(i,m)} \left( RM_{i,k} \cdot X_k \right).$$

So far, we have only considered the case of 4 transport channels A, B, C and D each having its own TTI interval duration.

The preceding equations can be rewritten quite simply in case at least two transport channels have the same TTI interval duration. Consider the case of I transport channels numbered 1 to I (instead of A, B, C, and D). The transport channels i with the same TTI interval duration $F_i$ can be grouped: $Z_{F,m}$ designates the normalized bit rate after rate matching corresponding to the TTI interval with index m of transport channels i having a common TTI interval duration $F_i = F$. Then

$$Z_{F,m} = \sum_{\substack{1 \le i \le I \\ F_i = F \\ k \in BBS(i,m)}} \left( RM_{i,k} \cdot X_k \right) \tag{18}$$

is obtained.

In this formula, the first index of $Z_{F,m}$ no longer identifies one transport channel but a group of transport channels having the same TTI interval duration (equal to F·10 ms). Furthermore, the $X_k$ and therefore $Z_{F,m}$ values are functions of the considered SCN scenario. The SCN scenario can simply be inferred from the list of transport format combinations used during the considered 8 consecutive radio frames, and, as before, it can be represented by the list of normalized $Z_{F,m}$ bit rate values:

$$SCN = (Z_{8,0}, Z_{4,0}, Z_{4,1}, Z_{2,0}, Z_{2,1}, Z_{2,2}, Z_{2,3}, Z_{1,0}, Z_{1,1}, Z_{1,2}, Z_{1,3}, Z_{1,4}, Z_{1,5}, Z_{1,6}, Z_{1,7})$$

In addition, transport channels with the same TTI interval duration have the same segmentation coefficients. Therefore, the same 25-fold of unknowns $(LF_c, \vec{x})$ is left where

$$\vec{x} = \begin{pmatrix} a_0, & a_1, & a_2, & a_3, & a_4, & a_5, & a_6, & a_7 \\ b_0^0, & b_1^0, & b_2^0, & b_3^0, & b_0^1, & b_1^1, & b_2^1, & b_3^1 \\ c_0^0, & c_1^0, & c_0^1, & c_1^1, & c_0^2, & c_1^2, & c_0^3, & c_1^3 \end{pmatrix} \tag{19}$$

Thus, the system of equations (3d) to (17d) defined hereafter is obtained, this system being very similar to the system of the equations (3c) to (17c). As for the preceding system, inequalities (10d) to (17d) are to be considered for each scenario.

$$LF_c \ge LFMIN_c \tag{3d}$$

$$a_0 + a_1 + ... + a_7 = 1 \tag{4d}$$

$$\forall t \in \{0,1,...,7\} \; a_t \ge 0 \tag{5d}$$

$$\forall m \in \{0,1\} \; b_0^m + b_1^m + b_2^m + b_3^m = 1 \tag{6d}$$

$$Vm \in \{0,1\} \; \forall t \in \{0,1,2,3\} \; b_t^m \geq 0 \tag{7d}$$

$$\forall m \in \{0,1,2,3\} \; c_0^m + c_1^m = 1 \tag{8d}$$

$$\forall m \in \{0,1,2,3\} \; c_0^m \geq 0, \text{ and } c_1^m \geq 0 \tag{9d}$$

$$LF_c \cdot (a_0 \cdot Z_{8,0} + b_0^0 \cdot Z_{4,0} + c_0^0 \cdot Z_{2,0} + Z_{1,0}) \leq \beta_0 N_{data} \tag{10d}$$

$$LF_c \cdot (a_1 \cdot Z_{8,0} + b_1^0 \cdot Z_{4,0} + c_1^0 \cdot Z_{2,0} + Z_{1,1}) \leq \beta_1 N_{data} \tag{11d}$$

$$LF_c \cdot (a_2 \cdot Z_{8,0} + b_2^0 \cdot Z_{4,0} + c_0^1 \cdot Z_{2,1} + Z_{1,2}) \leq \beta_2 N_{data} \tag{12d}$$

$$LF_c \cdot (a_3 \cdot Z_{8,0} + b_3^0 \cdot Z_{4,0} + c_1^1 \cdot Z_{2,1} + Z_{1,3}) \leq \beta_3 N_{data} \tag{13d}$$

$$LF_c \cdot (a_4 \cdot Z_{8,0} + b_0^1 \cdot Z_{4,1} + c_0^2 \cdot Z_{2,2} + Z_{1,4}) \leq \beta_4 N_{data} \tag{14d}$$

$$LF_c \cdot (a_5 \cdot Z_{8,0} + b_1^1 \cdot Z_{4,1} + c_1^2 \cdot Z_{2,2} + Z_{1,5}) \leq \beta_5 N_{data} \tag{15d}$$

$$LF_c \cdot (a_6 \cdot Z_{8,0} + b_2^1 \cdot Z_{4,1} + c_0^3 \cdot Z_{2,3} + Z_{1,6}) \leq \beta_6 N_{data} \tag{16d}$$

$$LF_c \cdot (a_7 \cdot Z_{8,0} + b_3^1 \cdot Z_{4,1} + c_1^3 \cdot Z_{2,3} + Z_{1,7}) \leq \beta_7 N_{data} \tag{17d}$$

It is also possible to vary, from one TTI interval to the other, the transport channel rate matching 0 attribute $RM_i$ in the downlink. Thus, for the downlink, formula (18) can be rewritten as follows:

$$Z_{F,m} = \sum_{\substack{1 \leq i \leq I \\ F_i = F \\ k \in BBS(i,m)}} \left( RM_{i,k,m}^{cm} \cdot X_k \right) \tag{18b}$$

where $RM_{i,k,m}^{cm}$ is the rate matching attribute for the type k data block of transport channel i during the TTI interval with index m for compressed mode.

To resolve the system of the equations (3d) to (17d), simplifications are possible.

It is recalled first of all that if $Z_{f,n}(SCN)$ and $Z_{F,m}(SCN')$ designate the value $Z_{F,m}$ for scenarios SCN and SCN' and that if, for any $F \in \{1,2,4,8\}$ and any

$$m \in \left\{ 0,1, \ldots, \frac{8}{F} - 1 \right\},$$

the relation $Z_{f,n}(SCN) \geq Z_{f,m}(SCN')$ holds true, then it is not necessary to consider scenario SCN' because all the solutions of the equations (10d) to (17d) for scenario SCN are also solutions for scenario SCN'. For this reason, any scenario SCN' so that there is no scenario SCN so that

$$\forall F \in \{1,2,4,8\}, \forall m \in \left\{0,1, \ldots, \frac{8}{F} - 1\right\} \quad Z_{F,m}(SCN) \geq Z_{F,m}(SCN'),$$

is hereafter called a relevant scenario. All that needs to be done is to resolve the system (3d) to (17d) by considering only relevant scenarios. This is a first kind of simplification.

Furthermore, if the TTI interval duration of the transport channels within the composite channel is less than or equal to 20 ms (40 ms respectively), it is possible to delete equations (12d) to (17d) (respectively (14d) to (17d)).

Moreover, if the composite channel comprises no transport channel with a TTI interval duration equal to 80 ms, 40 ms, or 20 ms, then we can delete respectively

- the set of unknowns

$$\{a_t\}_{0 \leq t \leq 7}, \quad \left\{b_t^m\right\}_{\substack{0 \leq t \leq 3 \\ 0 \leq m \leq 1}}, \quad \left\{c_t^m\right\}_{\substack{0 \leq t \leq 1 \\ 0 \leq m \leq 3}},$$

- equation sets {(4d),(5d)}, {(6d),(7d)}, {(8d),(9d)}, respectively,
- and any term containing respectively $Z_{8,0}$, $Z_{4,m}$ or $Z_{2,m}$ in the remaining equations.

Finally, if the composite channel comprises no transport channel with a TTI interval duration equal to 10 ms, all the terms in $Z_{1,m}$ can be deleted from the equations. Thus reducing the number of unknowns and equations according to the TTI interval duration is a second kind of simplification.

Finally, if $\beta_t$ is constant for a TTI interval, the unknowns corresponding to this TTI interval can be deleted. E. g., if the compression rate $\beta_t$ is constant for $m \cdot F \leq t < (m+1) \cdot F$ with $F \in \{2,4\}$, then in principle, $b_0^m = b_1^m = b_2^m = b_3^m = \frac{1}{4}$ is chosen if $F = 4$, deleting the unknowns $(b_0^m, b_1^m, b_2^m, b_3^m)$, or $c_0^m = c_1^m = \frac{1}{2}$ if $F = 2$, deleting the unknowns $(c_0^m, c_1^m)$. Such simplifications have already been used, e.g. in equations (3) to (17) for which $\beta_t$ was 1 for seven out of the eight radio frames. These further reductions of the number of unknowns are the third kind of simplification.

In the course of the description, we are envisaging the general case of equations (3d) to (17d) knowing that the simplifications of the first, second, or third kind can be performed thereon.

Hereafter, the way of resolving the system of the equations (3d) to (17d) will be described. In order to return to a so-called linear programming optimization problem, a change of variable is performed substituting a variable $IF_c$ for variable $LF_c$ as follows:

$$IF_c = -\frac{1}{LF_c}$$

The function $x \mapsto -\frac{1}{x}$ being a monotonic bijection for the set of positive real numbers, maximizing $LF_c$ is the same as maximizing $IF_c$. After this change of variable, the following equivalent equation system (3e) to (17e) is obtained:

$$IF_c \geq -\frac{1}{LFMIN_c} \tag{3e}$$

$$a_0 + a_1 + \ldots + a_7 = 1 \tag{4e}$$

$$\forall t \in \{0,1,\ldots,7\} a_t \geq 0 \tag{5e}$$

$$\forall m \in \{0,1\}\} b_0^m + b_1^m + b_2^m + b_3^m = 1 \tag{6e}$$

$$\forall m \in \{0,1\} \forall t \in \{0,1,2,3\} \; b_t^m \geq 0 \tag{7e}$$

$$\forall m \in \{0,1,2,3\} \ c_0^m + c_1^m = 1 \tag{8e}$$

$$\forall m \in \{0,1,2,3\} c_0^m \geq 0 \ , \text{ and } c_1^m \geq 0 \tag{9e}$$

$$a_0 \cdot Z_{8,0} + b_0^0 \cdot Z_{4,0} + c_0^0 \cdot Z_{2,0} + Z_{1,0} + \beta_0 N_{data} \cdot IF_c \leq 0 \tag{10e}$$

$$a_1 \cdot Z_{8,0} + b_1^0 \cdot Z_{4,0} + c_1^0 \cdot Z_{2,0} + Z_{1,1} + IF_c \ \beta_1 N_{data} \leq 0 \tag{11e}$$

$$a_2 \cdot Z_{8,0} + b_2^0 \cdot Z_{4,0} + c_0^1 \cdot Z_{2,1} + Z_{1,2} + IF_c \cdot \beta_2 N_{data} \leq 0 \tag{12e}$$

$$a_3 \cdot Z_{8,0} + b_3^0 \cdot Z_{4,0} + c_1^1 \cdot Z_{2,1} + Z_{1,3} + IF_c \cdot \beta_3 N_{data} \leq 0 \tag{13e}$$

$$a_4 \cdot Z_{8,0} + b_0^1 \cdot Z_{4,1} + c_0^2 \cdot Z_{2,2} + Z_{1,4} + IF_c \cdot \beta_4 N_{data} \leq 0 \tag{14e}$$

$$a_5 \cdot Z_{8,0} + b_1^1 \cdot Z_{4,1} + c_1^2 \cdot Z_{2,2} + Z_{1,5} + IF_c \cdot \beta_5 N_{data} \leq 0 \tag{15e}$$

$$a_6 \cdot Z_{8,0} + b_2^1 \cdot Z_{4,1} + c_0^3 \cdot Z_{2,3} + Z_{1,6} + IF_c \cdot \beta_6 N_{data} \leq 0 \tag{16e}$$

$$a_7 \cdot Z_{8,0} + b_3^1 \cdot Z_{4,1} + c_1^3 \cdot Z_{2,3} + Z_{1,7} + IF_c \cdot \beta_7 N_{data} \leq 0 \tag{17e}$$

Consequently, the variables are now the 25-fold ($IF_c, \vec{x}$), where $\vec{x}$ is the 24-fold of the segmentation coefficients as expressed by equation (19). The problem then consists in maximizing a linear function $f(IF_c, \vec{x}) = IF_c$ within a set of linear constraints given by equations (3e) to (17e). Such a problem of maximizing a linear function within a set of linear constraints is a linear programming problem, and can be resolved by a known method, called simplex method. A description of this method is given in the publication titled "Numerical recipes in C, the Art of Scientific Computing" by William H. Press, Saul A. Teukolsky, William T. Vetterling, and Brian P. Flannery, The Press Syndicate of the University of Cambridge, ISBN 0-521-43108-5, Second Edition.

In the course of the description, three norms written as $\|.\|_1, \|.\|_2, , \|.\|_\infty$ so that $\forall \vec{u} = (u_1, u_2, ..., u_n)$ are defined, then

$$\|\vec{u}\|_1 = \sum_{i=1}^{i=n} |u_i|, \ \|\vec{u}\|_2 = \sqrt{\sum_{i=1}^{i=n} (u_i)^2} \ \text{ and } \ \|\vec{u}\|_\infty = \max_{1 \leq i \leq n} |u_i|$$

Now, suppose that in addition to the constraints (3e) to (17e) for the maximization of $IF_c$, we wish to add additional constraints in order to limit the variance of the segmentation coefficients.

A first method for limiting this variance is to add additional constraints as inequalities, e.g.

$$\sum_{t=0}^{t=7} \left(a_t - \frac{1}{8}\right)^2 \leq P_1 \ \text{ or } \ \sum_{t=0}^{t=3} \left(b_t^m - \frac{1}{4}\right)^2 \leq P_2 \ \text{ or } \ \sum_{t=0}^{t=1} \left(c_t^m - \frac{1}{2}\right)^2 \leq P_3 \ ,$$

where $P_1$, $P_2$, and $P_3$ are positive constants. A second method, equivalent to the first one, consists in expressing constraints as

$$\left\| \vec{a} - \left( \frac{1}{8}, \frac{1}{8}, \frac{1}{8}, \frac{1}{8}, \frac{1}{8}, \frac{1}{8}, \frac{1}{8}, \frac{1}{8} \right) \right\|_2 \leq \sqrt{P_1} ,$$

$$\left\| \vec{b_m} - \left( \frac{1}{4}, \frac{1}{4}, \frac{1}{4}, \frac{1}{4} \right) \right\|_2 \leq \sqrt{P_2} , \quad \text{and} \quad \left\| \vec{c_m} - \left( \frac{1}{2}, \frac{1}{2} \right) \right\|_2 \leq \sqrt{P_3} .$$

These additional non-linear constraints prevent the system from being resolved by the simplex method. However, it is known that in any finite dimensional vector space, all norms are topologically equivalent. Thus, the objective of limiting the variance of the segmentation coefficients is achieved by replacing the norm $\|.\|_2$ by the norm $\|.\|_\infty$ according to a third method, or by the norm $\|.\|_1$ according to a fourth method. Using the norms $\|.\|_\infty$ and $\|.\|_1$ makes it possible to obtain linear constraints. Indeed, whatever the n-fold $\vec{u} = (u_1, u_2,...u_n)$ of real numbers, inequality $\|\vec{u}\|_\infty \leq \rho$ is equivalent to the combination of the following 2·n linear inequalities:

$$u_1 \leq \rho, \; u_1 \geq -\rho, \; u_2 \leq \rho, \; u_2 \geq -\rho, \; ..., \; u_n \leq \rho, \text{ and } u_n \geq -\rho.$$

Also, the following inequality $\|\vec{u}\|_1 \leq \rho$ can be made equivalent to the combination of the 2·n+1 linear inequalities provided that n additional unknowns $v_1, v_2, ..., $ and $v_n$ be added:

$u_1 \leq v_1, \; u_1 \geq -v_1, \; u_2 \leq v_2, \; u_2 \geq -v_2, \; ..., \; u_n \leq v_n, \; u_n \geq -v_n$ and $v_1 + v_2 + ... + v_n \leq \rho$.

Thus, by means of the third and fourth methods, the simplex method can still be used, while limiting the variance of the segmentation coefficients.

Hereafter, a second change of variable will be described, allowing to simplify the linear programming problem and consisting in converting it into several problems with fewer unknowns. This change of variable substitutes the following 16-fold $\vec{y}$ for the 24-fold $\vec{x}$ of the segmentation coefficients:

$$\vec{y} = \begin{pmatrix} p_0, & p_1, & p_2, & p_3, & p_4, & p_5, & p_6, \\ q_0^0, & q_1^0, & q_2^0, & & q_0^1, & q_1^1, & q_2^1, \\ r^0, & & r^1, & & r^2, & & r^3, \end{pmatrix}$$

the bijection $\vec{y} \mapsto \vec{x}$ being given by the following equations (20), (21), and (22):

$$\begin{cases} a_0 = p_0 & \cdot p_1 & \cdot p_3 \\ a_1 = p_0 & \cdot p_1 & \cdot (1-p_3) \\ a_2 = p_0 & \cdot (1-p_1) & \cdot p_4 \\ a_3 = p_0 & \cdot (1-p_1) & \cdot (1-p_4) \\ a_4 = (1-p_0) & \cdot p_2 & \cdot p_5 \\ a_5 = (1-p_0) & \cdot p_2 & \cdot (1-p_5) \\ a_6 = (1-p_0) & \cdot (1-p_2) & \cdot p_6 \\ a_8 = (1-p_0) & \cdot (1-p_2) & \cdot (1-p_6) \end{cases} \qquad (20)$$

$$\forall m \in \{0,1\} \begin{cases} b_0^m = q_0^m & \cdot q_1^m \\ b_1^m = q_0^m & \cdot (1-q_1^m) \\ b_2^m = (1-q_0^m) & \cdot q_2^m \\ b_3^m = (1-q_0^m) & \cdot (1-q_2^m) \end{cases} \qquad (21)$$

and

$$\forall m \in \{0,1,2,3\} \begin{cases} c_0^m = r^m \\ c_1^m = 1 - r^m \end{cases} \qquad (22)$$

The coefficients of $\vec{y}$ are dichotomy coefficients. Indeed, each coefficient d of $\vec{y}$ allows to determine the segmentation of a segment corresponding to $2 \cdot F$ radio frames of two smaller segments each corresponding to $F \cdot$ radio frames according to respective proportions d and (1-d). Thus, by $\log_2 F$ successive dichotomies, it is possible to determine the segmentation coefficient of each segment of a block corresponding to F radio frames.

The advantage of this change of variable is that constraints (4d) to (9d), after the change of variable, come down to:

$$\vec{y} \in [01]^{17} \qquad (23)$$

Furthermore, the inequalities respectively obtained from inequalities (10e) to (17e) are written as (10f) to (17f) by substituting the dichotomy coefficient unknown $\vec{y}$ for the segmentation coefficient unknown $\vec{x}$.

It is then possible to limit the variance of the segmentation coefficients by replacing constraint (23) by the following constraint (23b):

$$\vec{y} \in [e_1 \ f_1] \times [e_2 \ f_2] \times \ldots \times [e_{17} \ f_{17}] \qquad (23b)$$

with

$$\forall i \in \{1,2,\ldots,17\} \ 0 \leq \left(\frac{1}{2} - e_i\right) = \left(f_i - \frac{1}{2}\right) \leq \frac{1}{2}$$

Constraint (23b) is the same as constraint (23) when $\forall i \in \{1,2,\ldots,17\}$ $e_i = 0$ and $f_i = 1$. The problem is then the same as maximizing $IF_c$ under the constraints given by the system being a combination of equations (3e), (23b) and (10f) to (17f) with the set of unknowns $(IF_c, \vec{y})$.

This problem seems to be more complex to resolve analytically than the linear programming problem because constraints (10f) to (17f) are not linear. However, it is possible to proceed in three consecutive steps:

- a first step consisting in a single basic step of determining $p_0$,
- a second step that can be broken down into two basic steps respectively consisting in determining $(p_1, q_0^0)$ and $(p_2, q_0^1)$, and
- a third step that can be broken down into four basic steps respectively consisting in determining $(p_3, q_1^0, r^0)$, $(p_4, q_2^0, r^1)$, $(p_5, q_1^1, r^2)$, and $(p_6, q_2^1, r^3)$.

The sequence in which the basic steps are performed within each step is not relevant. Each of the seven basic steps is a linear programming problem that can be resolved by the simplex method. Furthermore, in each of these seven basic steps, $IF_c$ is one of the unknowns.

In the first step, the unknown is $(IF_c, p_0)$ and the constraints are:

- constraint (3e),
- constraint $p_0 \in [e_1 \ f_1]$, which is the combination of two linear constraints $p_0 \geq e_1$ and $p_0 \leq f_1$,
- and for each relevant scenario:

  - a first inequality obtained by summing inequalities (10f) to (13f) memberwise,
  - a second inequality obtained by summing inequalities (14f) to (17f) memberwise.

When the first step has been performed, the coefficient $p_0$ is no longer an unknown but a numerical constant part of the data of the problem of the following two steps just like scenarios SCN, the limits $e_1, e_2, \ldots, e_{17}$ and $f_1, f_2, \ldots,$

$f_{17}$, compression rates $\beta_0$, $\beta_1$, ..., $\beta_7$, and the available bit rate $N_{data}$ supplied to the composite channel. Furthermore, $IF_{c,0}$ designates the value of $IF_c$ obtained by the first step.

In each of the basic steps of the second step, the unknown according to the basic step is $(IF_c, p_1, q_0^0)$ or $(IF_c, p_2, q_0^1)$, and the constraints to be checked are:

- constraint $IF_c \leq IF_{c,0}$  (24)
- constraint (3e),
- constraint $(p_1, q_0^0) \in [e_2\ f_2] \times [e_8\ f_8]$ for the first basic step and constraint $(p_2, q_0^1) \in [e_3\ f_3] \times [e_{11}\ f_{11}]$ for the second basic step, these two constraints being the combination of four linear constraints, e.g. $p_1 \geqq e_2$, $p_1 \leq f_2$, $q_0^0 \geq e_8$, and $q_0^0 \leq f_8$ for the first basic step,
- and for each relevant scenario:

    - a first inequality obtained by summing inequalities (10f) and (11f) memberwise for the first basic step and inequalities (14f) and (15f) for the second basic step,
    - and a second inequality obtained by summing inequalities (12f) and (13f) memberwise for the first basic step, and inequalities (16f) and (17f) for the second basic step.

When the first and second steps have been performed, the five coefficients $p_0$, $p_1$, $q_0^0$, $p_2$ and $q_0^1$ are no longer unknowns, but numerical constraints being part of the data of the problem of the third step. Furthermore, $IF_{c,1}$ and $IF_{c,2}$ designate the values of $IF_c$ obtained during the first and second basic step of the second step.

In each of the basic steps of the third step, the unknown is respectively according to the considered basic step $(IF_c, p_3, q_1^0, r^0)$, $(IF_c, p_4, q_2^0, r^1)$, $(IF_c, p_5, q_1^1, r^2)$, or $(IF_c, p_6, q_2^1, r^3)$, and the constraints are:

- $IF_c \leq \min\{IF_{c,1}, IF_{c,2}\}$  (25)
- constraint (3e),
- the following constraint according to the considered basic step $(p_3, q_1^0, r^0) \in [e_4\ f_4] \times [e_9\ f_9] \times [e_{14}\ f_{14}]$ for the first basic step, $(p_4, q_2^0, r^1) \in [e_5\ f_5] \times [e_{10}\ f_{10}] \times (e_{15}\ f_{15}]$ for the second basic step, $(p_5, q_1^1, r^2) \in [e_6\ f_6] \times [e_{12}\ f_{12}] x\times [e_{16}\ f_{16}]$ for the third basic step, $(p_6, q_2^1, r^3) \in [e_7\ f_7] \times [e_{13}\ f_{13}] \times [e_{17}\ f_{17}]$ for the fourth basic step, each of these basic steps being the combination of six linear constraints,
- and for each relevant scenario:

    - a first respective inequality, (10f), (12f), (14f), and (16f), for each of the first, second, third, and fourth basic steps,
    - and a second respective inequality, (11f), (13f), (15f), and (17f), for each of the first, second, third, and fourth basic steps.

Segmentation coefficients $\overset{\rightharpoonup}{x}$ are then inferred from coefficients $\overset{\rightharpoonup}{y}$ through the change of variable defined by equations (20), (21), and (22) .

Hereafter, $IF_{c,0}$, $IF_{c,1}$, $IF_{c,2}$, $IF_{c,3}$, $IF_{c,4}$, $IF_{c,5}$, $IF_{c,6}$ designate the values of the unknown $IF_c$ obtained respectively by the first step, the two basic steps of the second step, and the four basic steps of the third step.

One solution $IF_c$ of the system of the equations (3e), (23b), and (10f) to (17f) is then:

$$IF_c = \min_{0 \leq i \leq 6} IF_{c,i}$$

Thus, for the downlink, the scale factor $LF_c$ used during the 8 radio frames affected by compressed mode can therefore be inferred from this solution:

$$LF_c = -\frac{1}{\min\limits_{0 \leq i \leq 6} IF_{c,i}} = \min_{0 \leq i \leq 6}\left(-\frac{1}{IF_{c,i}}\right)$$

Transmission power is proportional to $1/LF_c$ during these eight frames, and proportional to $1/LF_n$ during normal mode frames.

In the uplink, it is recalled that resolving the system allow only the segmentation coefficients to be determined, whereas the scale factor is assessed for each of the radio frames by resolving system (2b). Transmission power is then adjusted radio frame by radio frame and is proportional to 1/LF.

In the downlink, and during the eight frames of the global interval involved in compressed mode, rather then having a constant scale factor $LF_c$, it is also possible to choose a scale factor $LF_{c,F,m}$, which is variable depending on the duration $F \in \{1,2,4,8\}$ of the TTI interval and/or the number

$$m \in \left\{0,1, \ldots, \frac{8}{F} - 1\right\}$$

of the TTI interval.

For this purpose, $GF_t$ for $t \in \{0,1,...,7\}$, designates a gain affecting each of the radio frames numbered t, and NF a normalized scale factor, independent of gains $GF_t$. The scale factors $LF_{c,F,m}$ allowing to maintain transport channel balancing are then given by the following equations:

$$\forall F \in \{1,2,4,8\} \ \forall m \in \left\{0,1,...,\frac{8}{F} - 1\right\} \ LF_{c,F,m} = \frac{NF}{DF_{1,m}} \quad (26)$$

$$\forall m \in \{0,1,...,7\} \ DF_{1,m} = GF_m \quad (27)$$

$$\forall m \in \{0,1,2,3\} \ DF_{2,m} = c_0^m \cdot GF_{2,m} + c_1^m \cdot GF_{2 \cdot m+1} \quad (28)$$

$$\forall m \in \{0,1\} \ DF_{4,m} = \sum_{t=0}^{t-3} b_t^m \cdot GF_{4 \cdot m+t} \quad (29)$$

$$DF_{8,0} = \sum_{t=0}^{t=7} a_t \cdot GF_t \quad (30)$$

Gain $GF_t$ is such that the gain, with respect to normal mode, required for maintaining service quality during frame number t is equal to $GF_t \cdot \frac{LF_n}{NF}$. Thus, only the proportion between gains $GF_t$ is relevant. Furthermore, the following constraint (31) is added in particular to provide an upper limit to $GF_t$ and remove indetermination when gains $GF_t$ and scale factor NF together tend towards $+\infty$ while keeping the same proportions.

$$\forall t \in \{0,1,...,7\} \ 0 < GF_t \leq 1 \quad (31)$$

Also, $LFMIN_{c,F,m}$ is defined as the minimum value of scale factor $LF_{c,F,m}$ for transport channels with a TTI interval duration of $F \in \{1,2,4,8\}$ during the TTI interval of index m involved in compressed mode. If $P_i$ designates the maximum puncturing rate of transport channel i and if $T(F,m)$ designates the set of transport channels with TTI interval duration F allowed to transmit during their TTI interval of index m in compressed mode, then:

$$LFMIN_{c,F,m} = \max_{i \in T(F,m)} \frac{1 - P_i}{RM_i}$$

Then, constraint (3d) should be replaced with constraint (32) below:

$$\forall F \in \{1,2,4,8\} \ \forall m \in \left\{0,1,...,\frac{8}{F}\right\} \ LF_{c,F,m} \geq LFMIN_{c,F,m} \quad (32)$$

Finally, for any frame t $\in\{0,1,...,7\}$, the corresponding equations (10d) to (17d) should be replaced with equation (33) below:

$$LF_{c,8,0}\cdot a_t\cdot Z_{8,0}+LF_{c,4,tdiv4}\cdot b_{t\,mod\,4}^{tdiv4}\cdot Z_{4,tdiv4}+LF_{c,2,tdiv2}$$

$$\cdot c_{t\,mod2}^{tdiv2}\cdot Z_{2,tmod2}+LF_{c,1,t}\cdot Z_{1,t}\leq\beta_t N_{data} \tag{33}$$

The result is a system comprised of equations (26) to (33) and (4d) to (9d) the unknowns of which are NF, $GF_0$, $GF_1$, ..., $GF_7$, as well as segmentation coefficients $\vec{x}$ (see (19)). The resolution of this system consists in maximizing the function

$$\frac{NF}{\max\limits_{0\leq t\leq 7} GF_t},$$

i.e. in minimizing the maximum power for the global interval.

As this system is not linear, it cannot be resolved by the simplex method. However, a numerical method is applicable. E.g., starting from an initial value $\vec{P}$ of the unknowns (with $\vec{P}\in R^{33}$), a series of iterations is then performed each consisting in doing the following operations:

i. one or several directions $\vec{u}$ ($\vec{u}\in R^{33}$) of variation are determined for each determined direction of variation $\vec{u}$,

ii. a scalar quantity $\lambda$ is determined so that $\vec{P}+\lambda\cdot\vec{u}$ satisfies all constraints, the scalar quantity $\lambda$ maximizing

$$\frac{NF}{\max\limits_{0\leq t\leq 7} GF_t},$$

iii. if, for none of the directions of variation

$$\frac{NF}{\max\limits_{0\leq t\leq 7} GF_t}$$

can be increased significantly, the current value of $\vec{P}$ is the solution, otherwise, one of the variation directions $\vec{u}$ is selected, and $\vec{P}+\lambda\cdot\vec{u}$ is substituted for $\vec{P}$, $\lambda$ then being the scalar quantity corresponding to the direction $\vec{u}$ of variation; then step (i) is started again.

The initial value of $\vec{P}$ can for instance be given by:

$$NF = LFMIN_c \text{ and } GF_0 = GF_1 = ... = GF_7 = 1;$$

$$\forall t\in\{0,1,\dots,7\}\ a_t\ \frac{\beta_t}{\sum\limits_{u=0}^{u=7}\beta_u};$$

$$\forall m \in \{0,1\} \ \forall t \in \{0,1,2,3\} \quad b_t^m \ \frac{\beta_{4 \cdot m + t}}{\sum\limits_{u=0}^{u=3} \beta_{4 \cdot m + u}} \ ,$$

and

$$\forall m \in \{0,1,2,3\} \ \forall t \in \{0,1\} \quad c_t^m \ \frac{\beta_{2 \cdot m + t}}{\sum\limits_{u=0}^{u=1} \beta_{2 \cdot m + u}} \ .$$

It should be noted that the determination of the directions of variation can be done by the Powel method, also called multidimensional directional set method. This method is described in the publication already mentioned, titled "Numerical recipes in C", 2nd ed., pp. 412. The selected direction of variation is then typically that given by the greatest increase of

$$\frac{NF}{\max\limits_{0 \le t \le 7} GF_t} \ .$$

Furthermore, to determine $\lambda$, all that has to be done is substitute, in each equation, the coordinates of $\vec{P}$ + $\lambda \cdot \vec{u}$ for those of $\vec{P}$.
After substitution, the function to be maximized

$$\frac{NF}{\max\limits_{0 \le t \le 7} GF_t}$$

then becomes the maximum function from eight rational functions of $\lambda$ (i.e., eight ratios of two polynomials of $\lambda$). It is possible to find a partition of $[0, +\infty[$ in a finite number of intervals so that this function is one of these eight rational functions for each of the partition intervals. Determining this partition is the same as looking for rational function zeros and poles, which is a known problem.
Each equation of the system, for each interval of the partition, then becomes an inequality for a rational function of $\lambda$. Each equation then determines a finite union of intervals for $\lambda$, this union being included in the considered interval of the partition. By intersecting these unions for each equation, another finite union of intervals is obtained that is included in the considered interval of the partition. Finding the maximum of

$$\frac{NF}{\max\limits_{0 \le t \le 7} GF_t}$$

on this finite interval union is the same as finding the maximum of the rational function corresponding to the considered interval of the partition. This is a known problem, consisting in particular in determining the zeros and poles of the derivative of this rational function. Then, all that has to be done is to proceed in the same way for each interval in the partition, and select $\lambda$, from the determined maxima, giving the greatest value of

$$\frac{NF}{\max\limits_{0 \le t \le 7} GF_t}$$

.

Another heuristic method for resolving the system of the equations (26) to (33) and (4d) to (9d) consists in performing one or several iterations comprising all or part of the following steps, starting from an initial value $\vec{P}$ of the unknowns:

i. Factors $DF_{F,m}$ are calculated depending on the current value $\vec{P}$ of the unknowns by means of equations (27) to (30), then the $DF_{F,m}$ factors thus calculated are "frozen", then using the simplex method, the system of the remaining equations (26), (32) to (33) and (4d) to (9d) is resolved, where the unknown is $(NF, \vec{x})$, $\vec{x}$ being the segmentation coefficients as expressed by equation (19). This resolution is done in the same way as previously for equations (3d) to (17d). The segmentation coefficients resulting from this resolution are substituted for the current segmentation coefficients in $\vec{P}$.

ii. For the current value $\vec{P}$ of the unknowns, for any frame number $t \in \{0,1,...,7\}$, a factor $\Lambda_t$ is calculated using the following expression:

$$\max_{SCN}\left(\frac{\beta_t N_{data}}{DF_{8,0} \cdot a_t \cdot Z_{8,0} + DF_{4,t div 4} \cdot b_{t \bmod 4}^{t div 4} \cdot Z_{4,t div 4} + DF_{2,t div 2} \cdot c_{t \bmod 2}^{t div 2} \cdot Z_{2,t \bmod 2} + DF_{1,t} \cdot Z_{1,t}}\right)$$

Then, the following substitutions are performed in $\vec{P}$ :

$$GF_t \;\leftarrow\; \frac{GF_t}{\Lambda_t}\bigg/\left(\max_{0 \le u \le 7} \frac{GF_u}{\Lambda_u}\right) \quad \text{for } t \in \{0,1,\dots,7\}$$

$$a_t \;\leftarrow\; \frac{a_t \cdot \Lambda_t}{\sum_{u=0}^{u=7} a_u \cdot \Lambda_u} \quad \text{for } t \in \{0,1,\dots,7\}$$

$$b_t^m \;\leftarrow\; \frac{b_t^m \cdot \Lambda_{m \cdot 2 + t}}{\sum_{u=0}^{u=3} b_u^m \cdot \Lambda_{m \cdot 2 + u}} \quad \text{for } t \in \{0,1,2,3\} m \in \{0,1\}$$

$$c_t^m \;\leftarrow\; \frac{c_t^m \cdot \Lambda_{m \cdot 2 + t}}{\sum_{u=0}^{u=3} c_u^m \cdot \Lambda_{m \cdot 2 + u}} \quad \text{for } t \in \{0,1\} m \in \{0,1,2,3\}$$

Hereabove, the symbol $\leftarrow$ means that the right-hand member is substituted for the left-hand member. Substitutions are made by calculating, firstly, all new values depending on the current values, then, secondly, by substituting the new calculated values for the current values.

iii. For the current value $\vec{P}$ of the unknowns, a new value of NF is calculated, which, when all other unknowns are frozen, is the greatest one verifying all equations of type (33). For each scenario SCN and each frame number $t \in \{0,1,...,7\}$, equation (33) gives an upper limit for NF. The new value of NF is then the smallest of these upper limits.

In the optimization problems that have been exposed, the function to be maximized is $LF_c$

$$(\text{respectively}\quad \frac{NF}{\max\limits_{0 \le t \le 7} GF_t}).$$

Indeed, the rate

$$\left(\frac{LF_n}{LF_c}\right)$$

$$(\text{respectively}\quad \frac{LF_n}{LF} \cdot GF_t)$$

corresponds to the power gain required for maintaining, with respect to normal mode, the service quality for the global interval affected by compressed mode, i.e. frames 0 to 7 (respectively during frame $t \in \{0,1,...,7\}$) . Maximizing $LF_c$

$$(\text{respectively}\quad \frac{NF}{\max\limits_{0 \le t \le 7} GF_t})$$

is therefore the same as minimizing power by distributing the energy to be transmitted over the longest possible time, i.e. the global interval, and minimizing the total number of DTX symbols when the bit rate of the composite channel is at a maximum for the global interval. Interferences caused are then better distributed over time. Furthermore, it is advantageous to minimize the variance of segmentation coefficients because unequal segmentation results in degradation of reception due to loss of time diversity. Also, instead of maximizing $LF_c$

$$(\text{respectively}\quad \frac{NF}{\max\limits_{0 \le t \le 7} GF_t}),$$

provision is made for maximizing a function increasing with LFc

$$(\text{respectively}\quad \frac{NF}{\max\limits_{0 \le t \le 7} GF_t})$$

and decreasing with the variance of segmentation coefficients. This function is for instance:

$$LF_c - \Gamma_a \cdot \sum_{t=0}^{t=7} \left(a_t - \tfrac{1}{8}\right)^2 - \Gamma_b \cdot \sum_{t=0}^{t=3} \left(b_t - \tfrac{1}{4}\right)^2 - \Gamma_c \cdot \sum_{t=0}^{t=1} \left(c_t - \tfrac{1}{2}\right)^2$$

$$(\text{respectively}\quad \frac{NF}{\max\limits_{0 \le t \le 7} GF_t} - \Gamma_a \cdot \sum_{t=0}^{t=7} \left(a_t - \tfrac{1}{8}\right)^2 - \Gamma_b \cdot \sum_{t=0}^{t=3} \left(b_t - \tfrac{1}{4}\right)^2 - \Gamma_c \cdot \sum_{t=0}^{t=1} \left(c_t - \tfrac{1}{2}\right)^2)$$

where $\Gamma_a$, $\Gamma_b$, and $\Gamma_c$, are positive constants.

In this function, the terms in

$$\sum_{t=0}^{t=7} \left( a_t - \frac{1}{8} \right)^2 \, ,$$

,

$$\sum_{t=0}^{t=3} \left( b_t - \frac{1}{4} \right)^2 \, , \quad \text{and/or} \quad \sum_{t=0}^{t=1} \left( c_t - \frac{1}{2} \right)^2$$

can be replaced by any decreasing expression of the variance of segmentatic coefficients, and $LF_c$

$$\left( \text{respectively} \quad \frac{NF}{\max\limits_{0 \le t \le 7} GF_t} \right)$$

by any increasing expression of $LF_c$

$$\left( \text{respectively} \quad \frac{NF}{\max\limits_{0 \le t \le 7} GF_t} \right) .$$

It is also possible, instead of using such terms in the function to be maximized, to add to the equation system constraint equations providing upper limits for

$$\sum_{t=0}^{t=7} \left( a_t - \frac{1}{8} \right)^2 \, , \quad \sum_{t=0}^{t=3} \left( b_t - \frac{1}{4} \right)^2 \, , \quad \text{and/or} \quad \sum_{t=0}^{t=1} \left( c_t - \frac{1}{2} \right)^2 \, ,$$

or any other expression representative of the variance of segmentation coefficients, and to maximize $LF_c$ for the new system comprising these additional constraints, presuming the new system still has at least one solution.

Finally, it is obvious that throughout this document the considered variations of transmission power are variations for maintaining transport channel service quality when switching from normal mode to compressed mode and/ or when composite channel bit rate is varying. They do not comprise:

- variations resulting from fast power control, performed with a period that is shorter than the radio frame, and allowing to trace radio channel fadings as well as variations at interference level,
- nor variations for correcting the approximation done by assuming that the maximum bit error rate BER only depends on the mean Eb/I ratio.

Finally, it will be noted that for the two entities at the ends of the radio link in compressed mode to use the same segmentation coefficients, these coefficients are either calculated by one of both entities, which entity transfers them to the other entity, or calculated according to the same algorithm by both entities.

**Claims**

1.  A method for generating a compressed mode affecting a composite channel comprising at least two transport channels, each of said transport channels transmitting at least one data block for at least one respective transmission time interval (TTI), each of said transmission time intervals (TTI) having a duration specific to each of said transport channels, at least two of said transport channels having transmission time intervals of distinct duration, said method comprising a step of time segmenting the data of at least one of said transport channels, said time segmentation step segmenting said data blocks into data segments, each of said data segments being associated respectively with a time segment of said transmission time interval, said time segments constituting a period common to the transport channels of said composite channel,

characterized in that said segmentation step assigns, for the same transport channel, to each of said data segments, a data count determined depending on at least one segmentation coefficient, and in that at least two of said data segments from the same data block having been assigned by said segmentation have distinct data counts.

2. The method according to claim 1,

characterized in that said segmentation coefficients are determined as a function of a set of at least one scenario, each of the scenarios being parameterized by at least one possible bit rate of at least one transport channel.

3. The method according to any of claims 1 and 2, characterized in that it is implemented in a telecommunication system using a CDMA type multiple access technology.

4. The method according to any of claims 1 to 3, characterized in that it further comprises a rate matching step allowing to balance the transport channel bit rate of said composite channel, a rate matching ratio $(RF_i)$ being applied to each of said transport channels, said rate matching ratio $(RF_i)$ being equal to the product of a rate matching attribute $(RM_i)$ specific to said transport channel and a scale factor (LF), said scale factor (LF) being common to all of said transport channels, said scale factor (LF) being constant for each of said time segments and capable of having at least two distinct values $(LF_n, LF_c)$ for at least two time segments, a first one $(LF_c)$ of said at least two distinct values being associated with the compressed mode, and a second one $(LF_n)$ of said at least two distinct values being associated with a so-called normal mode.

5. The method according to claim 4, in turn a sub-claim of claim 3,

characterized in that said rate matching step is implemented from at least one mobile station to at least one base station of said telecommunication system.

6. The method according to any of claims 1 to 3, characterized in that it further comprises a rate matching step allowing to balance the transport channel bit rate of said composite channel, a rate matching ratio $(RF_i)$ being applied to each of said transport channels, said rate matching ratio $(RF_i)$ being equal to the product of a rate matching attribute $(RM_i)$ specific to said transport channel and a scale factor (LF), said scale factor (LF) being common to all of said transport channels, at least two intervals, so-called global intervals, being defined for all of said transport channels, the duration of said global intervals being a multiple of the duration of each of said transmission time intervals associated with said transport channels, said scale factor (LF) being constant for each global interval and capable of having at least two distinct values $(LF_n, LF_c)$ for at least two global intervals, a first one $(LF_c)$ of said at least two distinct values being associated with the compressed mode, and a second one $(LF_n)$ of said at least two distinct values being associated with a so-called normal mode.

7. The method according to any of claims 1 to 3 and 6,

characterized in that it further comprises a step of calculating said segmentation coefficients according to at least one of the criteria belonging to the group comprising:

- minimizing the variance of said segmentation coefficients for the same transport channel;
- maximizing said compressed mode scale factor $(LF_c)$.

8. The method according to any of claims 1 to 3 and 7,

characterized in that it further comprises at least one of the steps belonging to the group comprising the steps of:

- postponing transmission of at least part of the data comprising said at least one data segment in compressed mode;
- selecting, for at least one data block comprising said at least one data segment in compressed mode, a source encoding mode among a nominal bit rate mode and at least one reduced bit rate mode for at least one transmission time interval associated with said transport channel to be segmented, said reduced bit rate being lower than said nominal bit rate.

9. The method according to any of claims 6 to 8, in turn a sub-claim of claim 3,

characterized in that said rate matching step is implemented from at least one base station to at least one mobile station of said telecommunication system.

**10.** Method according to any of claims 4 to 9, characterized in that said scale factor (LF) is selected either from a first set ($\{LF_n\}$) when said global interval does not comprise any data segment in compressed mode, or from a second set ($\{LF_c\}$) when said global interval comprises at least one data segment in compressed mode.

**11.** Method according to claim 10, in turn a sub-claim of claim 6,
characterized in that said first set ($\{LF_n\}$) comprises a single element and in that said second set ($\{LF_c\}$) comprises an element for each of the compression configurations, each of said compression configurations being defined, on the one hand, by the number of time segments in compressed mode, for the corresponding global interval, and on the other hand, by at least one compression rate ($\beta$) associated with each of said time segments in compressed mode, said compression rate ($\beta$) representing, for said composite channel, the ratio between the available data count, for a given time segment, in compressed mode, and the available data count, for said given time segment, in normal mode.

**12.** A device for generating a compressed mode affecting a composite channel comprising at least two transport channels, each of said transport channels transmitting at least one data block for at least one respective transmission time interval (TTI), each of said transmission time intervals (TTI) having a duration specific to each of said transport channels, at least two of said transport channels having transmission time intervals of distinct duration, said device comprising a means for time segmenting the data of at least one of said transport channels, said time segmentation means segmenting said data blocks into data segments, each of said data segments being associated respectively with a time segment of said transmission time interval, said time segments constituting a period common to the transport channels of said composite channel,
characterized in that said segmentation means assigns, for the same transport channel, to each of said data segments, a data count determined depending on at least one segmentation coefficient, and in that at least two of said data segments from the same data block having been assigned by said segmentation have distinct data counts.

**13.** A base station of a telecommunication system comprising at least transmission means of a composite channel comprising at least two transport channels, characterized in that it comprises a device according to claim 12.

**14.** A mobile station of a telecommunication system comprising at least transmission means of a composite channel comprising at least two transport channels, characterized in that it comprises a device according to claim 12.

**15.** A device for generating a compressed mode affecting a composite channel comprising at least two transport channels, each of said transport channels transmitting at least one data block for at least one respective transmission time interval (TTI), each of said transmission time intervals (TTI) having a duration specific to each of said transport channels, at least two of said transport channels having transmission time intervals of distinct duration, said device comprising, for at least one of said transport channels, data segment concatenation means, said data segments being received in the same transmission time interval (TTI), said concatenation means concatenating said data segments into a data block, each of said data segments being respectively associated with a time segment of said transmission time interval, said time segments constituting a period common to the transport channels of said composite channel, characterized in that, for the same transport channel, at least two of said data segments received in the same incoming transmission time interval (TTI) of said concatenation means have distinct data counts.

**16.** A base station of a telecommunication system comprising at least transmission means of a composite channel comprising at least two transport channels, characterized in that it comprises a device according to claim 15.

**17.** A mobile station of a telecommunication system comprising at least transmission means of a composite channel comprising at least two transport channels,
characterized in that it comprises a device according to claim 15.

101

102A

104  FCS attachment

106  Concatenation and
     segmentation into blocks

108  Channel encoding

110  1st interleaving

112  Segmentation per
     multiplexing frame

114  Rate matching

100

102B

124  Multiplexing TrCHs

126  Physical channel
     segmentation

130  2nd interleaving

132  Physical channel mapping

PhCH#1        PhCH#2

## FIG. 1

FIG. 2

Radio frame 0
(normal mode)

Radio frame 1
(compressed mode)

Radio frame 2
(normal mode)

Radio frame 3
(normal mode)

Transmission gap

## FIG. 3

Radio frame 0
(normal mode)

Radio frame 1
(compressed mode)

Radio frame 2
(compressed mode)

Radio frame 3
(normal mode)

Transmission gap

## FIG. 4

FIG. 5

EP 1 091 515 A1

FIG. 6

**FIG. 7**

Compressed mode

Normal mode

FIG. 8

**European Patent Office**

## EUROPEAN SEARCH REPORT

Application Number

EP 00 46 0053

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | BAIER A ET AL: "MULTI-RATE DS-CDMA RADIO INTERFACE FOR THIRD-GENERATION CELLULAR SYSTEMS" IEE EUROPEAN CONFERENCE ON MOBILE AND PERSONAL COMMUNICATIONS, 13 December 1993 (1993-12-13), pages 255-260, XP000610288 London, GB *section 3.1* *section 4* *section 5.2* * figure 4 * * figure 5 * * figure 6 * | 1-3 | H04J13/02 |
| A | WO 97 40592 A (ERICSSON TELEFON AB L M) 30 October 1997 (1997-10-30) * page 5, line 16 - line 28 * * page 15, line 6 - line 15 * * figure 3B * | 1-3, 12-17 | |
| A | WO 98 18217 A (ERICSSON TELEFON AB L M) 30 April 1998 (1998-04-30) * page 3, line 20 - line 26 * | 1-3 | **TECHNICAL FIELDS SEARCHED (Int.Cl.7)** H04J H04B |
| A | GB 2 297 460 A (MOTOROLA LTD) 31 July 1996 (1996-07-31) * page 3, line 6 - line 22 * * page 5, line 19 - line 26 * | 1-3 | |

The present search report has been drawn up for all claims

| Place of search | Date of completion of the search | Examiner |
|---|---|---|
| THE HAGUE | 12 January 2001 | Moreno, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**  EP 00 46 0053

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2001

| Patent document cited in search report | | Publication date | Patent family member(s) | | Publication date |
|---|---|---|---|---|---|
| WO 9740592 | A | 30-10-1997 | US | 5896368 A | 20-04-1999 |
| | | | AU | 724048 B | 07-09-2000 |
| | | | AU | 2718397 A | 12-11-1997 |
| | | | BR | 9708730 A | 03-08-1999 |
| | | | CA | 2252382 A | 30-10-1997 |
| | | | CN | 1225764 A | 11-08-1999 |
| | | | EP | 0895675 A | 10-02-1999 |
| | | | JP | 2000509573 T | 25-07-2000 |
| WO 9818217 | A | 30-04-1998 | AU | 4730397 A | 15-05-1998 |
| | | | BR | 9711931 A | 24-08-1999 |
| | | | CN | 1234153 A | 03-11-1999 |
| | | | EP | 0965186 A | 22-12-1999 |
| GB 2297460 | A | 31-07-1996 | AU | 692055 B | 28-05-1998 |
| | | | AU | 4664396 A | 14-08-1996 |
| | | | CN | 1176717 A | 18-03-1998 |
| | | | DE | 69602078 D | 20-05-1999 |
| | | | DE | 69602078 T | 18-11-1999 |
| | | | WO | 9623369 A | 01-08-1996 |
| | | | EP | 0806097 A | 12-11-1997 |
| | | | FI | 973132 A | 28-07-1997 |
| | | | JP | 10512728 T | 02-12-1998 |
| | | | US | 6122270 A | 19-09-2000 |

EPO FORM P0459

For more details about this annex : see Official Journal of the European Patent Office, No. 12/82